# EUROPEAN PATENT APPLICATION

(11) **EP 4 481 333 A1**
(43) Date of publication of application: **25.12.2024**
(21) Application number: 23756129.5
(22) Date of filing: 26.01.2023
(51) Int. Cl.: G01D 5/245, G01D 5/244

(54) **POSITION DETECTION DEVICE**

(30) Priority: 16.02.2022 JP 2022022294
(71) Applicant: Oriental Motor Co., Ltd., Tokyo 111-0056 (JP); Ozeki, Sakao, Kakegawa-shi, Shizuoka, 436-0061 (JP)
(72) Inventor: HOUDA, Akihiko, Tsukuba-shi, Ibaraki 300-2635 (JP); SOMEYA, Masayuki, Tsukuba-shi, Ibaraki 300-2635 (JP); OZEKI, Sakao, Kakegawa-shi, Shizuoka 436-0061 (JP)
(74) Representative: Witte, Weller & Partner Patentanwälte mbB
(86) International application number: PCT/JP2023/002507
(87) International publication number: WO 2023/157601

(57) **Abstract**

A position detection device includes: a first support; a second support that is movable relative to the first support; a power generation sensor disposed on the first support; and a magnetic field generation source fixed to the second support. The relative movement of the second support causes a plurality of magnetic poles having the same polarity to sequentially enter the detection region of the power generation sensor. The power generation sensor includes: a magnetic wire configured to exhibit a large Barkhausen effect; a coil wound around the magnetic wire; and a first magnetic flux conducting piece and a second magnetic flux conducting piece respectively magnetically coupled to the opposite end portions of the magnetic wire and each having a magnetic flux conducting end opposed to the detection region.

## Description

### RELATED APPLICATION

This application claims the benefit of priority to Japanese Patent Application No. 2022-022294, filed on February 16, 2022, the disclosure of which is entirely incorporated herein by reference.

### TECHNICAL FIELD

The present invention relates to a position detection device utilizing a power generation sensor.

### BACKGROUND ART

Magnetic wires having a large Barkhausen effect (large Barkhausen jump) are known in the name of Wiegand wire or pulse wire. Such a magnetic wire includes a core portion, and a shell portion provided around the core portion. One of the core portion and the shell portion is a soft (magnetically soft) layer in which its magnetization direction is reversed even by application of a weak magnetic field, and the other of the core portion and the shell portion is a hard (magnetically hard) layer in which its magnetization direction is reversed only by application of a strong magnetic field. A power generation sensor is produced by winding a coil around the magnetic wire.

When the hard layer and the soft layer are magnetized in the same direction axially of the wire and the strength of an external magnetic field applied in a direction opposite to that magnetization direction is increased to a certain magnetic field strength, the magnetization direction of the soft layer is reversed. The reversal of the magnetization direction starts at a certain position of the magnetic wire to propagate to the entire wire, whereby the magnetization direction of the soft layer is totally reversed. At this time, the large Barkhausen effect is exhibited to induce a pulse signal in the coil wound around the magnetic wire. When the external magnetic field strength is further increased to another certain magnetic field strength, the magnetization direction of the hard layer is reversed.

The magnetic field strength at which the magnetization direction of the soft layer is reversed is herein referred to as "operational magnetic field" and the magnetic field strength at which the magnetization direction of the hard layer is reversed is herein referred to as "stabilization magnetic field."

A voltage outputted from the coil is characteristically constant irrespective of the change rate of an input magnetic field (external magnetic field), and is free from chattering because of its hysteresis with respect to the input magnetic field. For this reason, the pulse signal outputted from the coil is used for a position detection device and the like. Since the output from the coil involves electric power, a sensor of power generation type (power generation sensor) that does not require the supply of external electric power can be provided. That is, peripheral circuits are also operative with the output energy of the coil without the supply of the external electric power.

In order to provide the large Barkhausen effect, it is necessary to reverse the magnetization direction of only the soft layer in a state such that the magnetization directions of the hard layer and the soft layer are consistent. Even if the magnetization direction of only the soft layer is reversed in a state such that the magnetization directions of the hard layer and the soft layer are inconsistent, no pulse signal is generated or a pulse signal having a very small amplitude is generated.

In order to maximize the available electric power, it is important that the reversal of the magnetization direction of the soft layer propagates to the entire magnetic wire from a state such that the magnetization direction of the magnetic wire is entirely consistent. If the magnetization direction of the magnetic wire is partly inconsistent, a pulse signal having a very small amplitude is generated. Therefore, it is preferred to apply a uniform magnetic field to the entire magnetic wire.

Where an alternating magnetic field is applied to the power generation sensor, two pulse signals including one positive pulse signal and one negative pulse signal are generated per each cycle. A magnet is used as a magnetic field generation source, and the alternating magnetic field is applied to the power generation sensor by relative movement of the magnet and the power generation sensor. Thus, a position can be detected by counting generated pulse signals.

If the direction of the movement is changed, however, it is impossible to identify the movement direction only with the output of the single power generation sensor. To cope with this, a plurality of power generation sensors are used, so that the movement direction can be identified by utilizing a phase difference between the outputs of the respective power generation sensors.

However, the use of the plurality of power generation sensors increases the size and the costs of the position detection device.

PTL 1 discloses that the movement direction of a magnet is identified to determine the position by utilizing the single power generation sensor together with another sensor element different from the power generation sensor. In PTL 1, two magnetic poles, i.e., an N-pole and an S-pole provided in pair, generate an alternating magnetic field per each cycle, and the movement direction is determined based on a positive or negative pulse voltage outputted from the power generation sensor and a signal of the another sensor element, and the position is detected by counting. PTL 1 further discloses an arrangement utilizing a single magnet (dipole arrangement) and an arrangement utilizing a plurality of magnets (multipole arrangement) to improve the resolution.

### CITATION LIST

### PATENT LITERATURE

PTL 1: JP4712390

### SUMMARY OF INVENTION

### PROBLEMS TO BE SOLVED BY INVENTION

In order to improve the resolution of the position detection device utilizing the power generation sensor, an alternating magnetic field having a shorter cycle as compared with displacement needs to be applied to the magnetic wire. In the conventional art, the resolution is improved by increasing the number of magnetic poles to be detected.

In order to obtain a sufficient power pulse voltage from the power generation sensor, on the other hand, a parallel magnetic field having a magnetic field strength higher than a certain level needs to be applied to the entire magnetic wire. If an attempt is made to increase the number of magnetic poles without changing the size of the position detection device, the magnetic poles are disposed close to each other to cause magnetic interference, thereby making it difficult to apply the parallel magnetic field to the entire magnetic wire. Therefore, it is difficult to achieve both the reduction of the size and the increasing of the resolution.

An example embodiment of the present invention provides a position detection device having a higher position detecting resolution and a smaller size.

### SOLUTION TO PROBLEMS

An example embodiment of the present invention provides a position detection device, which includes: a first support; a second support that is movable relative to the first support; a power generation sensor disposed on the first support; and a magnetic field generation source fixed to the second support such that the relative movement of the second support causes a plurality of magnetic poles having the same polarity to sequentially enter the detection region of the power generation sensor along a track extending through the detection region. The power generation sensor includes: a magnetic wire configured to exhibit a large Barkhausen effect; a coil wound around the magnetic wire; and a first magnetic flux conducting piece and a second magnetic flux conducting piece respectively magnetically coupled to the opposite end portions of the magnetic wire and each having a magnetic flux conducting end that is opposed to the detection region. The coil of the power generation sensor is configured to generate a positive voltage pulse in a first state in which a magnetic flux from any one of the magnetic poles of the magnetic field generation source is conducted through the first magnetic flux conducting piece, and to generate a negative voltage pulse in a second state in which the magnetic flux from the any one of the magnetic poles of the magnetic field generation source is conducted through the second magnetic flux conducting piece.

With this arrangement, the second support is moved relative to the first support, whereby the magnetic poles of the magnetic field generation source are moved along the track extending through the detection region of the power generation sensor. Thus, when one of the magnetic poles of the magnetic field generation source is moved closer to the magnetic flux conducting end of the first magnetic flux conducting piece, the first state is achieved in which the magnetic flux from that magnetic pole is conducted through the first magnetic flux conducting piece, and the positive voltage pulse is generated from the coil wound around the magnetic wire. Further, when that magnetic pole is moved closer to the magnetic flux conducting end of the second magnetic flux conducting piece, the second state is achieved in which the magnetic flux from that magnetic pole is conducted through the second magnetic flux conducting piece, and the negative voltage pulse is generated from the coil wound around the magnetic wire. Therefore, two pulses, i.e., one positive pulse and one negative pulse, are generated while the one magnetic pole passes through the detection region. Thus, the position can be detected with a higher resolution with the use of a smaller number of power generation sensors. More specifically, with the use of the single power generation sensor, the detection of the position can be achieved with a resolution that is twice the number of the magnetic poles of the magnetic field generation source. This makes it possible to generate a greater number of pulses with a smaller number of magnetic poles. The position detection device thus provided has a smaller size and a higher resolution.

The plurality of magnetic poles of the magnetic field generation source (the magnetic poles having the same polarity) are preferably arranged such that, when one of the magnetic poles passes through the detection region, none of the other magnetic poles enter the detection region. Specifically, the plurality of magnetic poles are preferably arranged on the track so as to be spaced a distance greater than the axial length of the magnetic wire (e.g., a distance that is 1.5 or greater times the axial length of the magnetic wire) from each other.

Further, where the magnetic field generation source includes magnetic poles of opposite polarities, the magnetic poles are preferably arranged such that magnetic poles of one of the opposite polarities can be opposed to the magnetic flux conducting ends and none of magnetic poles of the other polarity can be opposed to the magnetic flux conducting ends in the detection region. That is, when the second support is moved relative to the first support, magnetic poles to be opposed to the first magnetic flux conducting piece and the second magnetic flux conducting piece in the detection region preferably have the one polarity (i.e., the same polarity).

In an example embodiment, the position detection device further includes a sensor element that outputs an identification signal indicating whether or not the any one of the magnetic poles of the magnetic field generation source is located between the magnetic flux conducting end of the first magnetic flux conducting piece and the magnetic flux conducting end of the second magnetic flux conducting piece.

With this arrangement, the identification signal indicating whether or not the any one of the magnetic poles is located between the magnetic flux conducting ends of the first magnetic flux conducting piece and the second magnetic flux conducting piece is outputted from the sensor element. Therefore, the direction of the relative movement of the second support with respect to the first support can be identified based on a combination of the identification signal and the positive and negative voltage pulses outputted from the coil of the power generation sensor. Thus, the detection of the position can be achieved even if the direction of the relative movement is changed. Particularly, with the provision of at least one power generation sensor (preferably, a single power generation sensor) and at least one sensor element (preferably, a single sensor element), the detection of the position can be achieved to accommodate the change in the direction of the relative movement. Therefore, the position detection device thus provided has a smaller size.

The sensor element is preferably a sensor other than the power generation sensor and, for example, a magneto-resistive element or a Hall element may be used.

In an example embodiment, the magnetic wire has a core portion, and a shell portion provided around the core portion. One of the core portion and the shell portion is a soft layer (magnetically soft layer), and the other of the core portion and the shell portion is a hard layer (magnetically hard layer). The any one of the magnetic poles is moved closer to the magnetic flux conducting end of the first magnetic flux conducting piece along the track in a first set state in which the magnetization directions of the soft layer and the hard layer are consistent to both extend in a first axial direction which is one of the opposite axial directions of the magnetic wire, whereby the magnetization direction of the soft layer is reversed into a second axial direction which is the other axial direction of the magnetic wire and the first state is achieved in which the positive voltage pulse is generated from the coil. The any one of the magnetic poles is moved still closer to the first magnetic flux conducting piece along the track from the first state, whereby the magnetization direction of the hard layer is reversed into the second axial direction and a second set state is achieved in which the magnetization directions of the soft layer and the hard layer are consistent to both extend in the second axial direction. The any one of the magnetic poles is moved closer to the magnetic flux conducting end of the second magnetic flux conducting piece along the track in the second set state, whereby the magnetization direction of the soft layer is reversed into the first axial direction and the second state is achieved in which the negative voltage pulse is generated from the coil. The any one of the magnetic poles is moved still closer to the magnetic flux conducting end of the second magnetic flux conducting piece along the track from the second state, whereby the magnetization direction of the hard layer is reversed into the first axial direction and the first set state is achieved in which the magnetization directions of the soft layer and the hard layer are consistent to both extend in the first axial direction.

With this arrangement, the magnetic pole is moved closer to the magnetic flux conducting end of the first magnetic flux conducting piece along the track, thereby making it possible to generate the positive voltage pulse and to achieve the second set state, which is a preparatory state for the generation of the negative voltage pulse. Further, the magnetic pole is moved closer to the magnetic flux conducting end of the second magnetic flux conducting piece along the track, thereby making it possible to generate the negative voltage pulse and to achieve the first set state, which is a preparatory state for the generation of the positive voltage pulse. Thus, two voltage pulses are generated every time the magnetic pole passes through the vicinities of the magnetic flux conducting ends of the respective magnetic flux conducting pieces. Therefore, the detection of the position can be achieved with a higher resolution by a smaller-size arrangement without the need for a multiplicity of magnetic poles.

In an example embodiment, the first magnetic flux conducting piece and the second magnetic flux conducting piece respectively comprise magnetically soft components having substantially the same shape. The magnetically soft components respectively include wire placement portions through which the opposite end portions of the magnetic wire extend, and are each configured in an I-shape as extending from the wire placement portion to the magnetic flux conducting end in a predetermined direction orthogonal to the axis direction of the magnetic wire.

With this arrangement, the first magnetic flux conducting piece and the second magnetic flux conducting piece respectively comprise the magnetically soft components having substantially the same shape. Therefore, when the magnetic pole is moved closer to either of the magnetic flux conducting ends of the magnetic flux conducting pieces, the magnetic flux conducting pieces can apply magnetic fields having substantially the same strength to the magnetic wire. Further, the magnetically soft components of the magnetic flux conducting pieces are each configured in the I-shape as extending orthogonally to the axis direction of the magnetic wire, so that the magnetic flux conducting ends can be disposed apart from the magnetic wire. Thus, the magnetic poles of the magnetic field generation source can be arranged so as to be moved along the track apart from the magnetic wire. Therefore, the magnetic flux from each of the magnetic poles is mostly guided to the magnetic flux conducting end and then applied to the magnetic wire through the magnetic flux conducting piece. That is, the amount of a magnetic flux to be applied from the magnetic pole directly into the axially middle portion of the magnetic wire can be reduced. Thus, the magnetization direction in the magnetic wire is substantially prevented from being gradually reversed when the magnetic pole is moved between the paired magnetic flux conducting pieces along the track extending through the detection region. Thereby, when the magnetic pole reaches either of the magnetic flux conducting pieces, the large Barkhausen effect can be exhibited (the magnetization direction of the soft layer can be reversed at once).

In an example embodiment, the magnetically soft components each have a greater partial length as measured from the magnetic wire to the magnetic flux conducting end thereof than as measured from the magnetic wire to an end thereof opposite from the magnetic flux conducting end. The partial length measured from the magnetic wire to the magnetic flux conducting end is preferably not smaller than 50% of a distance between the magnetic wire connection positions of the first magnetic flux conducting piece and the second magnetic flux conducting piece.

With this arrangement, the I-shaped magnetically-soft components are each magnetically coupled to the magnetic wire at a position offset from the longitudinally middle point thereof in one direction. Thus, it is possible to increase the distance between the magnetic wire and the magnetic flux conducting end while reducing the size of the I-shaped magnetically-soft component. This makes it possible to substantially prevent the magnetic flux from directly entering the axially middle portion of the magnetic wire from the magnetic pole, while reducing the size of the power generation sensor (and, hence, reducing the size of the position detection device). Thus, a voltage pulse having a higher amplitude can be provided by the large Barkhausen effect. Particularly, where the partial length of the magnetically soft component measured from the magnetic wire to the magnetic flux conducting end is not smaller than 50% of the distance between the magnetic wire connection positions of the first magnetic flux conducting piece and the second magnetic flux conducting piece, the magnetic flux from the magnetic pole can be mostly guided to the magnetic flux conducting piece and conducted from the magnetic flux conducting piece to the magnetic wire. The position detection device thus provided includes the power generation sensor having a smaller size and a higher output capacity, and yet has a higher resolution.

In an example embodiment, the first magnetic flux conducting piece and the second magnetic flux conducting piece respectively comprise magnetically soft components having substantially the same shape. The magnetically soft components of the first magnetic flux conducting piece and the second magnetic flux conducting piece respectively include axis-orthogonal portions provided in pair as extending parallel to each other from the opposite end portions of the magnetic wire orthogonally to the axis direction of the magnetic wire and respectively connected to the opposite end portions of the magnetic wire, and axis-parallel portions provided in pair as extending toward each other from the distal end portions of the axis-orthogonal portions in the axis direction and respectively having adjacent ends opposed to each other and spaced a gap from each other in the axis direction, and are each configured in an L-shape or a T-shape. The magnetic flux conducting ends opposed to the detection region are respectively provided on the axis-parallel portions.

With this arrangement, the axis-parallel portions respectively extending from the distal end portions of the axis-orthogonal portions in the axis direction are located between the detection region and the magnetic wire, thereby functioning to shield the magnetic wire from the magnetic pole passing through the detection region. This reliably reduces the amount of the magnetic flux directly entering the axially middle portion of the magnetic wire from the magnetic pole. Therefore, almost all the magnetic flux from the magnetic pole can be guided to the magnetic flux conducting ends of the axis-parallel portions opposed to the detection region and conducted to the ends of the magnetic wire through the magnetic flux conducting pieces. As a result, the magnetic fields can be applied in the axis direction to substantially the entire magnetic wire, making it possible to efficiently exhibit the large Barkhausen effect. In addition, the size of the power generation sensor as measured orthogonally to the axis direction of the magnetic wire can be reduced with the use of the magnetic flux conducting pieces each constituted by the L-shaped or T-shaped magnetically-soft component. Accordingly,the size of the position detection device can be reduced. Therefore, the position detection device thus provided includes the power generation sensor having a smaller size and a higher output capacity, and yet has a higher resolution.

In an example embodiment, the gap has a distance that is 5% to 50% (preferably 20% to 40%) of a distance between the magnetic wire connection positions of the axis-orthogonal portions provided in pair as measured in the axis direction.

The distance between the adjacent ends of the axis-parallel portions is set to the aforementioned range to thereby provide an excellent magnetic shielding effect. Therefore, the magnetic fields can be applied in the axis direction to a wider axial range of the magnetic wire, making it possible to sufficiently induce the large Barkhausen effect. Thus, the power generation sensor can output higher-output signals.

In an example embodiment, the first magnetic flux conducting piece and the second magnetic flux conducting piece are configured such that magnetic fields generated around the magnetic flux conducting ends of the first magnetic flux conducting piece and the second magnetic flux conducting piece by the any one of the magnetic poles present in the detection region are corrected into magnetic fields extending in the axis direction of the magnetic wire and the corrected magnetic fields are applied to the magnetic wire.

With this arrangement, the magnetic flux conducting pieces have a magnetic field correcting function to correct the magnetic fields applied from the magnetic field generation source in the detection region, thereby making it possible to apply the magnetic fields along the axis direction of the magnetic wire between the opposite end portions of the magnetic wire. Thus, the power generation sensor can sufficiently induce the large Barkhausen effect to generate a higher-output pulse signal.

In an example embodiment, the magnetic poles of the magnetic field generation source enter the detection region of the power generation sensor along the track, as the second support is moved relative to the first support. The axis direction of the magnetic wire of the power generation sensor is parallel to a tangential line of the track extending through a certain point of tangency present on the track, and the axially middle point of the magnetic wire is present on a perpendicular line extending through the point of tangency perpendicularly to the tangential line.

With this arrangement, the magnetic fields from the magnetic poles of the magnetic field generation source can be efficiently guided to the magnetic flux conducting pieces. Therefore, the voltage pulses can be generated every time the magnetic poles are each moved closer to the magnetic flux conducting ends of the first magnetic flux conducting piece and the second magnetic flux conducting piece.

Where the track of the magnetic poles is a linear track, the tangential line coincides with the linear track. Therefore, the axis direction of the magnetic wire is parallel to the linear track.

Where the track of the magnetic poles is a circular track defined about a rotation axis, the perpendicular line may be parallel to the rotation axis, or may be parallel to a rotation radius (perpendicular to the rotation axis).

In an example embodiment, the second support is rotated relative to the first support about a predetermined rotation axis, and the first support and the second support are opposed to each other and spaced from each other in a direction parallel to the rotation axis. The plurality of magnetic poles of the magnetic field generation source are arranged equidistantly on the circular track about the rotation axis, and the magnetization directions of the respective magnetic poles are parallel to the rotation axis or are parallel to the radius of the circular track. The power generation sensor is supported by the first support such that the middle point of the magnetic wire is located at a certain point of tangency present on a circle having the same radius as the circular track about the rotation axis and the detection region faces toward the second support with the magnetic wire extending along a tangential line of the circle extending through the point of tangency.

With this arrangement, the plurality of magnetic poles of the magnetic field generation source are moved along the circular track defined about the rotation axis, and are arranged equidistantly on the circular track. Therefore, the position of the second support relative to the first support can be detected based on voltage pulses generated when the magnetic poles each pass through the detection region of the power generation sensor. The first support and the second support are opposed to each other in a direction parallel to the rotation axis, and the power generation sensor supported by the first support is disposed such that the detection region faces toward the second support. Therefore, the position detection device thus provided is a rotation position detection device having a smaller size as measured radially about the rotation axis. The magnetization directions of the magnetic poles may be parallel to the rotation axis, or may be parallel to the radial direction. Where the magnetization directions of the magnetic poles are parallel to the radial direction, the power generation sensor may be disposed so as to respond to magnetic poles arranged radially outward or may be disposed so as to respond to magnetic poles arranged radially inward.

The above and other objects, features and advantages of the present invention will become more apparent from the following description of the example embodiments with reference to the attached drawings.

### BRIEF DESCRIPTION OF DRAWINGS

[FIGS. 1A-1B] FIGS. 1A and 1B are diagrams that describe the detection principle of a position detection device according to one example embodiment of the present invention.
[FIGS. 1C-1D] FIGS. 1C and 1D are diagrams that describe the detection principle of the position detection device.
[FIG. 1E] FIG. 1E is a diagram that describes the detection principle of the position detection device.
[FIGS. 2A-2B] FIGS. 2A and 2B are diagrams that describe the determination of a movement direction (rotation direction) in the position detection device.
[FIGS. 2C-2D] FIGS. 2C and 2D are diagrams that describe the determination of the movement direction (rotation direction) in the position detection device.
[FIGS. 3A-3B] FIGS. 3A and 3B are diagrams that describe a configuration and an operation according to a comparative embodiment.
[FIGS. 3C-3D] FIGS. 3C and 3D are diagrams that describe the configuration and the operation according to the comparative embodiment.
[FIGS. 3E-3F] FIGS. 3E and 3F are diagrams that describe the configuration and the operation according to the comparative embodiment.
[FIGS. 4A-4B] FIG. 4A is a diagram that describes the structure of a specific example of a power generation sensor, and FIG. 4B shows magnetic flux densities observed at different axial positions of a magnetic wire (at different wire positions).
[FIGS. 5A-5B] FIG. 5A is a diagram that describes the structure of another specific example of the power generation sensor, and FIG. 5B shows magnetic flux densities observed at the different axial positions of the magnetic wire (at the different wire positions).
[FIGS. 6A-6B] FIG. 6A is a diagram that describes the structure of further another specific example of the power generation sensor, and FIG. 6B shows magnetic flux densities observed at the different axial positions of the magnetic wire (at the different wire positions).
[FIG. 7] FIG. 7 is a perspective view that describes an exemplary configuration of a position detection device according to another example embodiment of the present invention, showing an exemplary configuration of a linear position detection device.
[FIG. 8A] FIG. 8A is a diagram that describes an exemplary configuration of a position detection device according to further another example embodiment of the present invention, showing a rotation position detection device including a power generation sensor having L-shaped magnetic flux conducting pieces.
[FIG. 8B] FIG. 8B is a diagram that describes the exemplary configuration of the position detection device.
[FIG. 8C] FIG. 8C is a diagram that describes the exemplary configuration of the position detection device.
[FIGS. 9A-9C] FIGS. 9A to 9C are diagrams that describe the operation of the power generation sensor having the L-shaped magnetic flux conducting pieces in detail.
[FIGS. 9D-9F] FIGS. 9D to 9F are diagrams that describe the operation of the power generation sensor having the L-shaped magnetic flux conducting pieces in detail.
[FIG. 10A] FIG. 10A is a diagram that describes an exemplary configuration of a position detection device according to still another example embodiment of the present invention, showing a rotation position detection device employing a power generation sensor having I-shaped magnetic flux conducting pieces.
[FIG. 10B] FIG. 10B is a diagram that describes the exemplary configuration of the position detection device.
[FIG. 10C] FIG. 10C is a diagram that describes the exemplary configuration of the position detection device.
[FIGS. 11A-11B] FIGS. 11A and 11B are perspective views showing other specific examples of the power generation sensor.

### DESCRIPTION OF EXAMPLE EMBODIMENTS

With reference to the attached drawings, example embodiments of the present invention will hereinafter be described in detail.

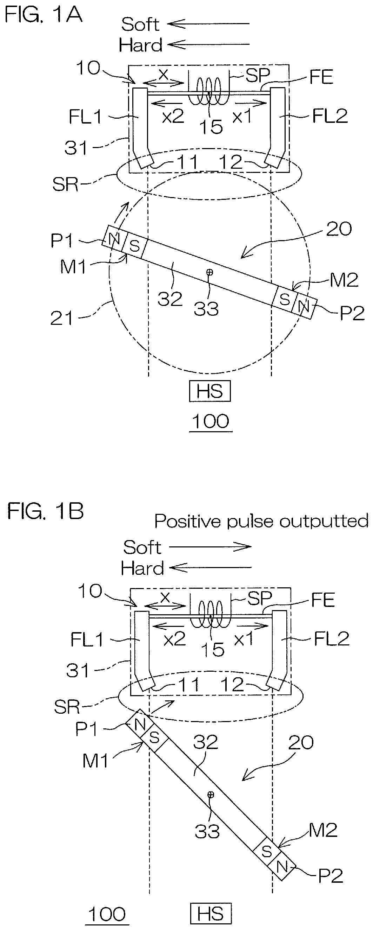

FIGS. 1A to 1E are diagrams that describe the detection principle of a position detection device according to one example embodiment of the present invention. The position detection device 100 includes a power generation sensor 10 and a magnetic field generation source 20. The power generation sensor 10 is disposed on a first support 31 and supported by the first support 31. The magnetic field generation source 20 is fixed to a second support 32.

The second support 32 is moved relative to the first support 31. Thus, the magnetic field generation source 20 is moved together with the second support 32 relative to the first support 31. In this example, the second support 32 is rotated about a rotation axis 33. The magnetic field generation source 20 includes a plurality of magnets M1, M2 located apart from the rotation axis 33. The magnets M1, M2 are fixed to the second support 32 such that the relative movement of the second support 32, specifically the rotation of the second support 32 about the rotation axis 33, causes the magnets M1, M2 to sequentially enter the detection region SR of the power generation sensor 10. The magnets M1, M2 are magnetized such that magnetic poles P1, P2 thereof having the same polarity can be opposed to the power generation sensor 10 in the detection region SR. The magnetic poles P1, P2 are moved along a circular track 21 about the rotation axis 33. The layout of the power generation sensor 10 and the magnetic field generation source 20 is determined such that the circular track 21 extends through the detection region SR. The magnetic poles P1, P2 are equidistantly arranged on the circular track 21.

The power generation sensor 10 includes a magnetic wire FE, a coil SP (induction coil) wound around the magnetic wire FE, and a pair of magnetic flux conducting pieces, i.e., a first magnetic flux conducting piece FL1 and a second magnetic flux conducting piece FL2. The magnetic wire FE is configured so as to exhibit a large Barkhausen effect. Specifically, the magnetic wire FE has a core portion, and a shell portion covering the core portion. One of the core portion and the shell portion is a soft layer (magnetically soft layer) in which its magnetization direction is reversed even by application of a weak magnetic field, and the other of the core portion and the shell portion is a hard layer (magnetically hard layer) in which its magnetization direction is reversed only by application of a strong magnetic field.

The magnetic flux conducting pieces FL1, FL2 provided in pair are respectively magnetically coupled to the opposite end portions of the magnetic wire FE. The magnetic flux conducting pieces FL1, FL2 respectively have magnetic flux conducting ends 11, 12 opposed to the detection region SR. The axis direction x of the magnetic wire FE is set parallel to a tangential line of the circular track 21 extending through a point (point of tangency) present on the circular track 21 between the pair of magnetic flux conducting ends 11, 12, and the middle point 15 of the magnetic wire FE with respect to the axis direction x (hereinafter referred to as "axially middle point 15") is set on a perpendicular line extending through the point of tangency perpendicularly to the tangential line. The coil SP generates a positive voltage pulse in a first state in which a magnetic flux from either one of the magnetic poles P1, P2 of the magnets M1, M2 is conducted through the first magnetic flux conducting piece FL1, and generates a negative voltage pulse in a second state in which the magnetic flux from the either one of the magnetic poles P1, P2 of the magnets M1, M2 is conducted through the second magnetic flux conducting piece FL2.

More specifically, FIG. 1A shows a first set state, which is a preparatory state for the generation of the positive voltage pulse. That is, the magnetization directions of the soft layer and the hard layer of the magnetic wire FE are consistent to both extend in a second axial direction x2 which is one of opposite axial directions x of the magnetic wire FE. When the second support 32 is rotated in the first set state to move the magnetic pole P1 of the magnet M1 (N-pole in the illustrated example) closer to the magnetic flux conducting end 11 of the first magnetic flux conducting piece FL1 along the circular track 21, as shown in FIG. 1B, the first state is achieved in which the magnetic flux from the magnetic pole P1 is conducted through the first magnetic flux conducting piece FL1, whereby the operational magnetic field is applied to the magnetic wire FE in a first axial direction x1 which is the other of the opposite axial directions x of the magnetic wire FE. Thus, the large Barkhausen effect is exhibited to reverse the magnetization direction of the soft layer into the first axial direction x1. Accordingly, a positive voltage pulse is generated from the coil SP.

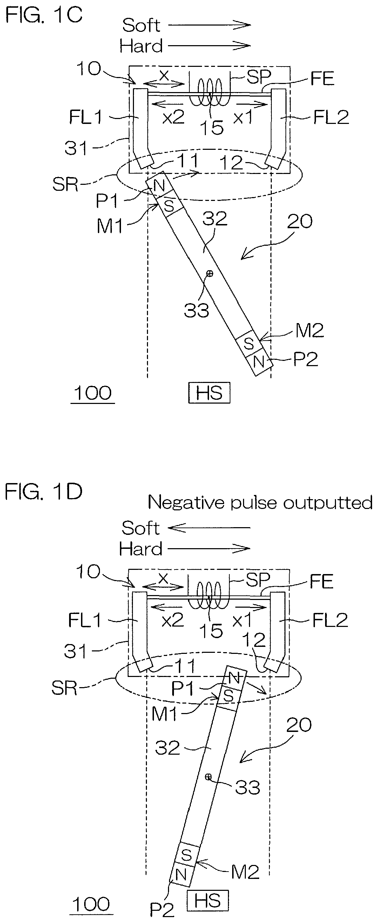

When the magnetic pole P1 is moved still closer to the magnetic flux conducting end 11 of the first magnetic flux conducting piece FL1 from the first state by the rotation of the second support 32, as shown in FIG. 1C, the magnetic flux applied to the magnetic wire FE in the first axial direction x1 is strengthened to apply the stabilization magnetic field to the magnetic wire FE, whereby the magnetization direction of the hard layer is also reversed into the first axial direction x1. Thus, a second set state is achieved in which the magnetization directions of the soft layer and the hard layer are consistent to both extend in the first axial direction x1. The second set state is a preparatory state for the generation of a negative voltage pulse.

When the second support 32 is further rotated from the second set state to move the magnetic pole P1 still closer to the magnetic flux conducting end 12 of the second magnetic flux conducting piece FL2 along the circular track 21, as shown in FIG. 1D, the second state is achieved in which the magnetic flux from the magnetic pole P1 is conducted through the second magnetic flux conducting piece FL2, whereby the operational magnetic field is applied to the magnetic wire FE in the second axial direction x2. Thus, the large Barkhausen effect is exhibited to reverse the magnetization direction of the soft layer into the second axial direction x2. Accordingly, a negative voltage pulse is generated from the coil SP.

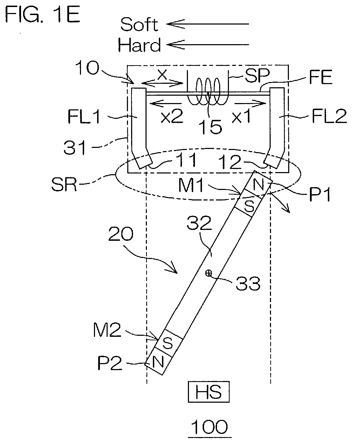

When the magnetic pole P1 is moved still closer to the magnetic flux conducting end 12 of the second magnetic flux conducting piece FL2 from the second state by the rotation of the second support 32, as shown in FIG. 1E, the magnetic flux applied to the magnetic wire FE in the second axial direction x2 is strengthened to apply the stabilization magnetic field to the magnetic wire FE, whereby the magnetization direction of the hard layer is also reversed into the second axial direction x2. Thus, the first set state is achieved again in which the magnetization directions of the soft layer and the hard layer are consistent to both extend in the second axial direction x2.

Since the magnetic pole P2 of the magnet M2 to be next moved closer to the first magnetic flux conducting piece FL1 by the rotation of the second support 32 in the same rotation direction has the same polarity as the magnetic pole P1 (N-pole), the same operation is repeated.

Thus, when the one magnetic pole P1 passes through the detection region SR of the power generation sensor 10, two pulses including one positive pulse and one negative pulse are outputted from the coil SP. When the other magnetic pole P2 passes through the detection region SR of the power generation sensor 10, pulses are outputted in the same manner. Therefore, one turn of the second support 32 provides four voltage pulses. With the use of these voltage pulses, the relative rotational position of the second support 32 with respect to the first support 31 can be detected.

The detection region SR is a space region in which the operational magnetic field and the stabilization magnetic field are applied to the magnetic wire FE as the either one of the magnetic poles P1, P2 passes therethrough.

The position detection device 100 further includes a sensor element that identifies the direction of the rotation. The sensor element HS may be a magnetic sensor that detects magnetic fields generated by the magnets M1, M2. Examples of the magnetic sensor include a magneto-resistive element and a Hall element. The sensor element HS is disposed and configured such that an identification signal is outputted when the either one of the magnetic poles P1, P2 is located between the magnetic flux conducting end 11 of the first magnetic flux conducting piece FL1 and the magnetic flux conducting end 12 of the second magnetic flux conducting piece FL2 on the track 21. In the illustrated example, when the either one of the magnetic poles P1, P2 is located between the first magnetic flux conducting piece FL1 and the second magnetic flux conducting piece FL2 on the track 21, the sensor element HS detects a magnetic field from the other of the magnetic poles P1, P2 and generates the identification signal. Since the two magnetic poles P1, P2 are equidistantly arranged on the circular track 21 and a distance between the two magnetic poles P1, P2 is greater than the axial length of the magnetic wire FE, there is no possibility that the two magnetic poles P1, P2 are simultaneously located in the detection region SR.

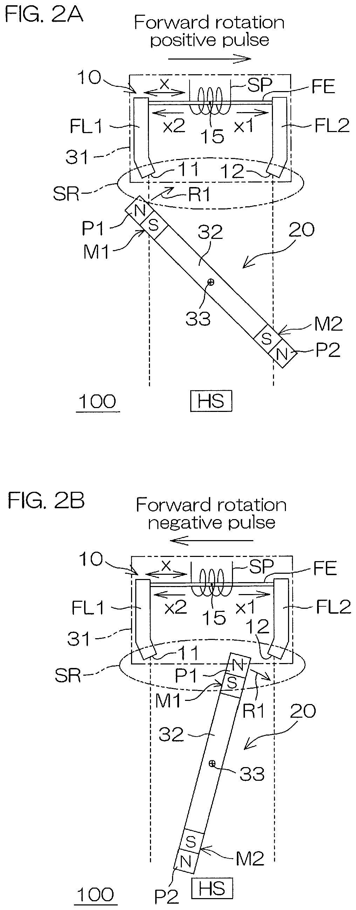

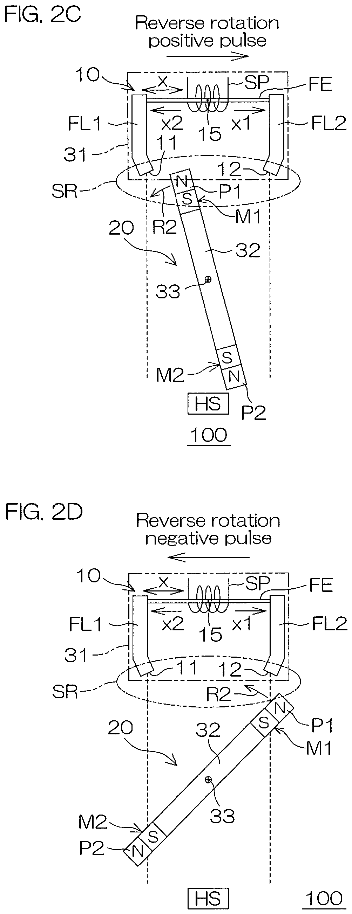

FIGS. 2A to 2D show four states for the generation of the voltage pulses. FIG. 2A shows a state in which the second support 32 is rotated about the rotation axis 33 in a forward rotation direction R1 to move the magnetic pole P1 closer to the first magnetic flux conducting piece FL1. At this time, the first state is achieved from the first set state, and the coil SP generates a positive pulse. FIG. 2B shows a state in which the second support 32 is rotated in the forward rotation direction R1 to move the magnetic pole P1 closer to the second magnetic flux conducting piece FL2. At this time, the second state is achieved from the second set state, and the coil SP generates a negative pulse. FIG. 2C shows a state in which the second support 32 is rotated in a reverse rotation direction R2 to move the magnetic pole P1 closer to the first magnetic flux conducting piece FL1. At this time, the first state is achieved from the first set state, and the coil SP generates a positive pulse. FIG. 2D shows a state in which the second support 32 is rotated in the reverse rotation direction R2 to move the magnetic pole P1 closer to the second magnetic flux conducting piece FL2. At this time, the second state is achieved from the second set state, and the coil SP generates a negative pulse.

The states of FIGS. 2A and 2C in which the positive pulse is generated are discriminated from each other by the identification signal outputted by the sensor element HS. That is, in the state of FIG. 2A, the magnetic pole P1 located in the detection region SR is not positioned between the first magnetic flux conducting piece FL1 and the second magnetic flux conducting piece FL2, so that the sensor element HS does not output the identification signal. In the state of FIG. 2C, in contrast, the magnetic pole P1 located in the detection region SR is positioned between the first magnetic flux conducting piece FL1 and the second magnetic flux conducting piece FL2, so that the sensor element HS outputs the identification signal.

Similarly, the states of FIGS. 2B and 2D in which the negative pulse is generated are discriminated from each other by the identification signal outputted by the sensor element HS. That is, in the state of FIG. 2B, the magnetic pole P1 located in the detection region SR is positioned between the first magnetic flux conducting piece FL1 and the second magnetic flux conducting piece FL2, so that the sensor element HS outputs the identification signal. In the state of FIG. 2D, in contrast, the magnetic pole P1 located in the detection region SR is not positioned between the first magnetic flux conducting piece FL1 and the second magnetic flux conducting piece FL2, so that the sensor element HS does not output the identification signal.

Thus, the rotation direction of the second support 32 (the forward rotation direction R1 or the reverse rotation direction R2) can be determined based on a combination of the positive or negative pulse generated by the coil SP and the identification signal outputted by the sensor element HS. Even if the rotation direction is reversed, therefore, the relative rotational position of the second support 32 with respect to the first support 31 can be detected based on the voltage pulse outputted by the power generation sensor 10.

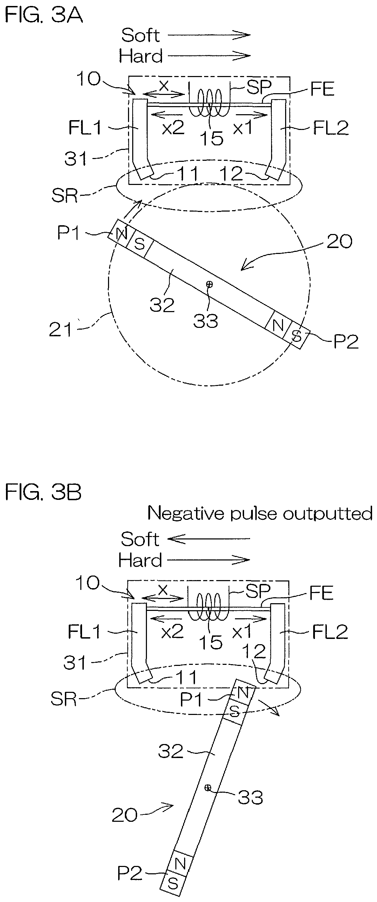

FIGS. 3A to 3F are diagrams that describe a configuration and an operation according to a comparative embodiment. In FIGS. 3A to 3F, components corresponding to those shown in FIGS. 1A to 1E will be denoted by the same reference characters as in FIGS. 1A to 1E. In the comparative embodiment, the magnetic field generation source 20 includes two magnetic poles P1, P2 to be brought into opposed relation to the magnetic flux conducting pieces FL1, FL2 in the detection region SR. These two magnetic poles P1, P2 have different polarities. That is, one (magnetic pole P1) of the magnetic poles P1, P2 is an N-pole, and the other magnetic pole P2 is an S-pole. When the second support 32 is rotated in one direction, therefore, the N-pole and the S-pole alternately enter the detection region SR of the power generation sensor 10.

When the N-pole (magnetic pole P1) is moved closer to the first magnetic flux conducting piece FL1 along the circular track 21, as shown in FIG. 3A, the soft layer and the hard layer of the magnetic wire FE are both magnetized in the first axial direction x1. When the N-pole (magnetic pole P1) passes through the vicinity of the magnetic flux conducting end 11 of the first magnetic flux conducting piece FL1, therefore, a magnetic field applied to the magnetic wire FE in the first axial direction x1 is strengthened, so that the magnetization directions of the soft layer and the hard layer are not changed.

When the second support 32 is rotated from this state to move the N-pole (magnetic pole P1) closer to the magnetic flux conducting end 12 of the second magnetic flux conducting piece FL2, as shown in FIG. 3B, a magnetic flux from the N-pole (magnetic pole P1) is conducted through the second magnetic flux conducting piece FL2, whereby the operational magnetic field is applied to the magnetic wire FE. Thus, the magnetization direction of the soft layer is reversed into the second axial direction x2, so that the coil SP generates a negative pulse due to the large Barkhausen effect.

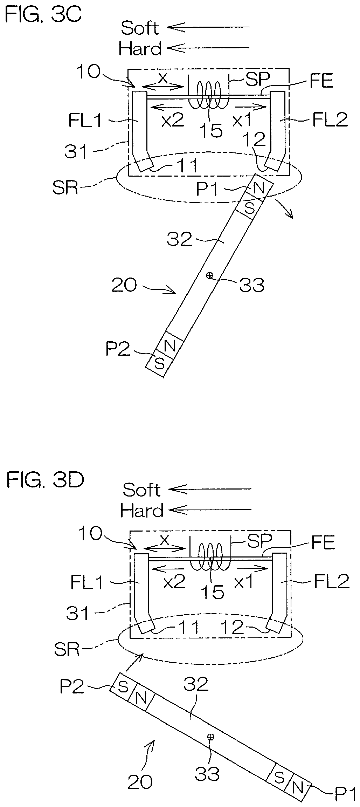

When the second support 32 is further rotated to move the N-pole (magnetic pole P1) into opposed relation to the magnetic flux conducting end 12 of the second magnetic flux conducting piece FL2, as shown in FIG. 3C, a still stronger magnetic field is applied to the magnetic wire FE in the second axial direction x2. Therefore, the stabilization magnetic field is applied to the magnetic wire FE, and the magnetization direction of the hard layer is also reversed into the second axial direction x2. Thus, a set state for the generation of a positive pulse is achieved.

When the second support 32 is rotated from this state to move the S-pole (magnetic pole P2) closer to the magnetic flux conducting end 11 of the first magnetic flux conducting piece FL1, as shown in FIG. 3D, the magnetic field applied to the magnetic wire FE in the second axial direction x2 is strengthened, so that the reversal of the soft layer does not occur.

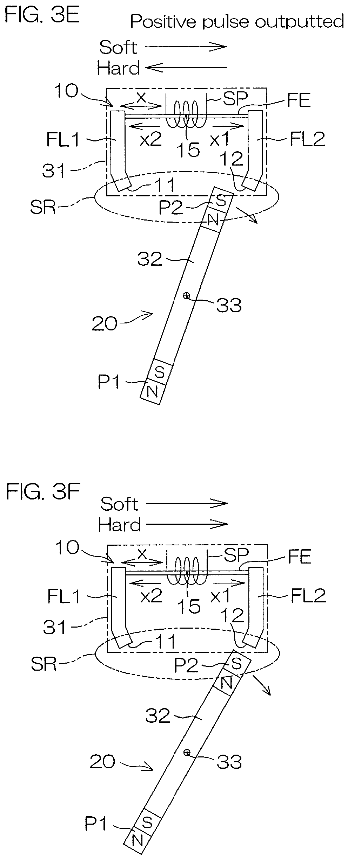

When the second support 32 is further rotated to move the S-pole (magnetic pole P2) closer to the magnetic flux conducting end 12 of the second magnetic flux conducting piece FL2, as shown in FIG. 3E, a magnetic flux from the S-pole (magnetic pole P2) is conducted through the second magnetic flux conducting piece FL2, whereby the operational magnetic field is applied to the magnetic wire FE. Thus, the magnetization direction of the soft layer is reversed into the first axial direction x1, so that the coil SP generates a positive pulse due to the large Barkhausen effect.

When the second support 32 is further rotated to move the S-pole (magnetic pole P2) into opposed relation to the magnetic flux conducting end 12 of the second magnetic flux conducting piece FL2, as shown in FIG. 3F, a still stronger magnetic field is applied to the magnetic wire FE in the first axial direction x1, so that the stabilization magnetic field is applied to the magnetic wire FE. Thus, the magnetization direction of the hard layer is also reversed into the first axial direction x1, whereby a set state for the generation of a negative pulse is achieved.

In this comparative embodiment, one negative pulse is generated by the passage of the N-pole (magnetic pole P1), and one positive pulse is generated by the passage of the S-pole (magnetic pole P2). Therefore, two voltage pulses are generated during one turn of the second support 32.

In comparison, the number of the voltage pulses to be generated in the example embodiment described above is twice the number of the voltage pulses to be generated in the comparative embodiment. That is, according to the example embodiment described above, the single power generation sensor 10 generates position detection pulses with a resolution twice the number of the magnetic poles of the magnetic field generation source 20. Since a multiplicity of position detection pulses can be generated with a smaller number of magnetic poles, the position detection device thus provided has a smaller size and yet has a higher resolution.

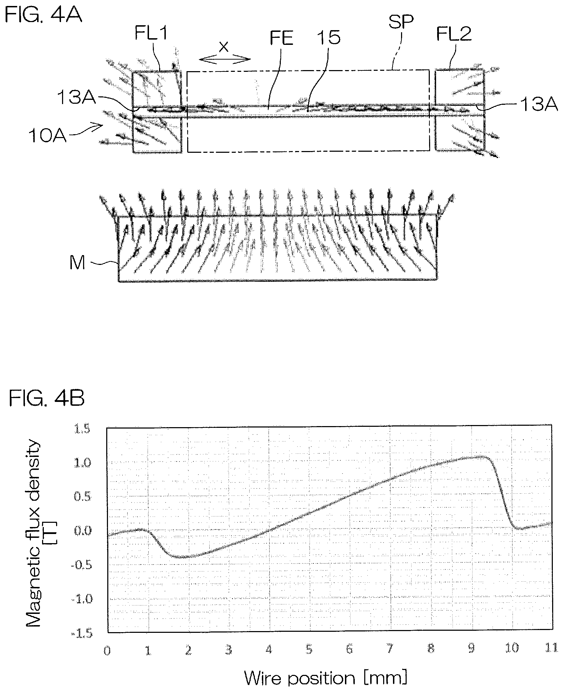

FIG. 4A is a diagram that describes the structure of a specific example of the power generation sensor 10. A power generation sensor 10A includes a magnetic wire FE, and a first magnetic flux conducting piece FL1 and a second magnetic flux conducting piece FL2 magnetically coupled to the opposite end portions of the magnetic wire FE. The first magnetic flux conducting piece FL1 and the second magnetic flux conducting piece FL2 have substantially the same shape and substantially the same size. The magnetic flux conducting pieces FL1, FL2 are each composed of a magnetically soft component configured in a hollow cylindrical shape and having a through-hole 13A extending along the center axis thereof. The opposite end portions of the magnetic wire FE are inserted in the through-holes 13A of the magnetic flux conducting pieces FL1, FL2. A coil SP is wound around the magnetic wire FE between the first magnetic flux conducting piece FL1 and the second magnetic flux conducting piece FL2.

In FIG. 4A, the conduction of a magnetic flux observed when the N-pole of a magnet M is located in the vicinity of the power generation sensor 10A is shown by vectors. Specifically, the magnetic wire FE has an overall length of 11 mm, and the magnet M has a length of 10 mm as measured in the axis direction x of the magnetic wire FE. The magnet M (magnetic pole) is disposed such that the middle point thereof with respect to the axis direction x is offset from the axially middle point 15 of the magnetic wire FE by 1 mm toward the first magnetic flux conducting piece FL1. Magnetic flux densities observed at this time at different positions on the magnetic wire FE along the axis direction x (at different wire positions) are shown in FIG. 4B. A wire position at which an end of the magnetic wire FE on the side of the first magnetic flux conducting piece FL1 is located is defined as an origin "0" and a wire position at which an end of the magnetic wire FE on the side of the second magnetic flux conducting piece FL2 is located is defined as "11." The wire positions are each represented by a distance as measured from the origin in the axis direction x.

FIG. 4B indicates that the direction of a magnetic field is reversed at a certain wire position on the side of the first magnetic flux conducting piece FL1 with respect to the axially middle point 15 of the magnetic wire FE. This means that, when the magnetic pole is moved in the axis direction x, partial magnetization reversal occurs in the magnetic wire FE (particularly, in the soft layer).

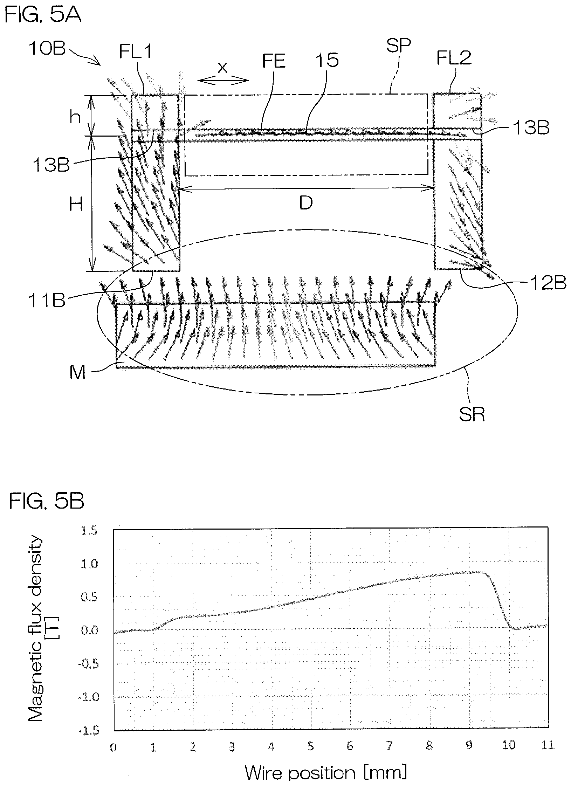

FIG. 5A is a diagram that describes the structure of another specific example of the power generation sensor 10. A power generation sensor 10B includes a magnetic wire FE, and a first magnetic flux conducting piece FL1 and a second magnetic flux conducting piece FL2 respectively magnetically coupled to the opposite end portions of the magnetic wire FE. The first magnetic flux conducting piece FL1 and the second magnetic flux conducting piece FL2 are respectively composed of magnetically soft components having substantially the same shape and substantially the same size. The first magnetic flux conducting piece FL1 and the second magnetic flux conducting piece FL2 extend parallel to each other in a predetermined direction orthogonal to the axis direction x of the magnetic wire FE. The magnetic flux conducting pieces FL1, FL2 each have a generally linear parallelepiped shape, i.e., are each configured in an I-shape.

The magnetic flux conducting pieces FL1, FL2 each have a proximal portion magnetically coupled to the magnetic wire FE, and a distal end face opposite from the proximal portion and serving as a magnetic flux conducting end 11B, 12B. The magnetic flux conducting end 11B, 12B has a planar surface parallel to the axis direction x of the magnetic wire FE and serving as a detection region opposition surface opposed to a detection region SR. The proximal portion of the magnetic flux conducting piece FL1, FL2 has a wire placement portion 13B provided in the form of a through-hole or a through-groove extending therethrough axially of the magnetic wire FE. The opposite end portions of the magnetic wire FE respectively extend through the wire placement portions 13B of the magnetic flux conducting pieces FL1, FL2 in the axis direction x. Resin portions (not shown), for example, are respectively provided in the wire placement portions 13B to connect and fix the magnetic wire FE to the magnetic flux conducting pieces FL1, FL2. A coil SP is wound around the magnetic wire FE between the first magnetic flux conducting piece FL1 and the second magnetic flux conducting piece FL2.

The power generation sensor 10B has a space region opposed to the magnetic flux conducting ends 11B, 12B (detection region opposition surfaces), and the space region serves as the detection region SR for the detection of a magnetic field.

In FIG. 5A, the conduction of a magnetic flux observed when the N-pole of a magnet M is located in the vicinity of the power generation sensor 10B is shown by vectors. Specifically, the magnetic wire FE has an overall length of 11 mm, and the magnet M has a length of 10 mm as measured in the axis direction x of the magnetic wire FE. The magnet M (magnetic pole) is disposed such that the middle point thereof with respect to the axis direction x is offset from the axially middle point 15 of the magnetic wire FE by 1 mm toward the first magnetic flux conducting piece FL1. Magnetic flux densities observed at this time at different positions on the magnetic wire FE along the axis direction x (at different wire positions) are shown in FIG. 5B. A wire position at which an end of the magnetic wire FE on the side of the first magnetic flux conducting piece FL1 is located is defined as an origin "0" and a wire position at which an end of the magnetic wire FE on the side of the second magnetic flux conducting piece FL2 is located is defined as "11." The wire positions are each represented by a distance as measured from the origin in the axis direction x.

FIG. 5B indicates that the direction of the magnetic field in the magnetic wire FE is consistent over the entire axial length range of the magnetic wire FE though the strength of the magnetic field varies depending on the wire position.

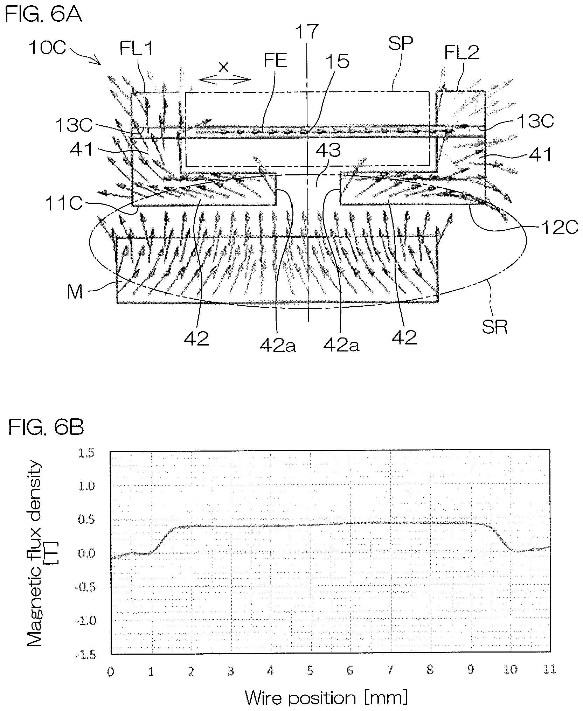

FIG. 6A is a diagram that describes the structure of further another specific example of the power generation sensor 10. A power generation sensor 10C includes a magnetic wire FE, and a first magnetic flux conducting piece FL1 and a second magnetic flux conducting piece FL2 respectively magnetically coupled to the opposite end portions of the magnetic wire FE. A coil SP is wound around the magnetic wire FE between the first magnetic flux conducting piece FL1 and the second magnetic flux conducting piece FL2. The first magnetic flux conducting piece FL1 and the second magnetic flux conducting piece FL2 are respectively composed of magnetically soft components having substantially the same shape and substantially the same size. More specifically, the first magnetic flux conducting piece FL1 and the second magnetic flux conducting piece FL2 are configured symmetrically with respect to a symmetry plane 17 (a virtual plane to be used to describe the geometrical layout) extending orthogonally to the axis direction x through the axially middle point 15 of the magnetic wire FE.

The first magnetic flux conducting piece FL1 and the second magnetic flux conducting piece FL2 respectively have axis-orthogonal portions 41 extending parallel to each other from the opposite end portions of the magnetic wire FE orthogonally to the axis direction x, and axis-parallel portions 42 respectively extending toward each other from the distal end portions of the axis-orthogonal portions 41 in the axis direction x. The opposite end portions of the magnetic wire FE are respectively fixed to the proximal portions of the axis-orthogonal portions 41 of the first magnetic flux conducting piece FL1 and the second magnetic flux conducting piece FL2. More specifically, the proximal portions of the axis-orthogonal portions 41 each include a wire placement portion 13C formed with a hole or a groove extending therethrough in the axis direction x. The opposite end portions of the magnetic wire FE respectively extend through the wire placement portions 13C of the axis-orthogonal portions 41 of the first magnetic flux conducting piece FL1 and the second magnetic flux conducting piece FL2, and are respectively fixed to the axis-orthogonal portions 41. The magnetic wire FE is connected and fixed to the first magnetic flux conducting piece FL1 and the second magnetic flux conducting piece FL2, for example, by resin portions (not shown) respectively provided in the holes or the grooves of the wire placement portions 13C. Thus, the opposite end portions of the magnetic wire FE are magnetically coupled to the first magnetic flux conducting piece FL1 and the second magnetic flux conducting piece FL2.

The power generation sensor 10C is configured such that a region opposite from the magnetic wire FE with respect to the axis-parallel portions 42 is defined as a detection region SR for detection of a magnetic field.

The magnetic flux conducting pieces FL1, FL2 each composed of the magnetically soft component each include the axis-orthogonal portion 41 (having a generally parallelepiped shape) and the axis-parallel portion 42 (having a generally parallelepiped shape) connected to the distal end portion of the axis-orthogonal portion 41 adjacent to the detection region SR, and each have an L-shape bent at a right angle at a connection portion between the axis-orthogonal portion 41 and the axis-parallel portion 42. The axis-parallel portions 42 extend in the axis direction x so as to shield the magnetic wire FE, i.e., so as to shield the magnetic wire FE from the detection region SR. The first magnetic flux conducting piece FL1 and the second magnetic flux conducting piece FL2, which are symmetrically configured, extend toward the axially middle portion of the magnetic wire FE , and the adjacent ends 42a of the first magnetic flux conducting piece FL1 and the second magnetic flux conducting piece FL2 are opposed to each other with a gap 43 defined therebetween around the axially middle point 15 of the magnetic wire FE. The adjacent ends 42a each have a surface extending orthogonally to the axis direction x, and the two surfaces of the two adjacent ends 42a are parallel to each other and opposed to each other in the axis direction x.

The axis-parallel portions 42 of the first magnetic flux conducting piece FL1 and the second magnetic flux conducting piece FL2 respectively have magnetic flux conducting ends 11C, 12C serving as the detection region opposition surfaces opposed to the detection region SR. The magnetic flux conducting ends 11C, 12C (detection region opposition surfaces) are planar surfaces parallel to the axis direction x. When a magnetic pole of a magnet M is located in the detection region SR, the magnetic flux conducting ends 11C, 12C (detection region opposition surfaces) guide a magnetic flux from the magnetic pole into the first magnetic flux conducting piece FL1 and the second magnetic flux conducting piece FL2.

In FIG. 6A, the conduction of the magnetic flux observed when the N-pole of the magnet M is located in the vicinity of the power generation sensor 10C is shown by vectors. Specifically, the magnetic wire FE has an overall length of 11 mm, and the magnet M has a length of 10 mm as measured in the axis direction x of the magnetic wire FE. The magnet M (magnetic pole) is disposed such that the middle point thereof with respect to the axis direction x is offset from the axially middle point 15 of the magnetic wire FE by 1 mm toward the first magnetic flux conducting piece FL1. Magnetic flux densities observed at this time at different positions on the magnetic wire FE along the axis direction x (at different wire positions) are shown in FIG. 6B. A wire position at which an end of the magnetic wire FE on the side of the first magnetic flux conducting piece FL1 is located is defined as an origin "0" and a wire position at which an end of the magnetic wire FE on the side of the second magnetic flux conducting piece FL2 is located is defined as "11." The wire positions are each represented by a distance as measured from the origin in the axis direction x.

FIG. 6B indicates that the direction of the magnetic field in the magnetic wire FE is consistent over the entire axial length range of the magnetic wire FE and, in addition, the magnetic field is uniformly applied to the magnetic wire FE over the entire range between the first magnetic flux conducting piece FL1 and the second magnetic flux conducting piece FL2.

In view of the foregoing, the arrangement employing the L-shaped magnetic flux conducting pieces FL1, FL2 as shown in FIG. 6A is most preferred, and the arrangement employing the I-shaped magnetic flux conducting pieces FL1, FL2 as shown in FIG. 5A is next preferred.

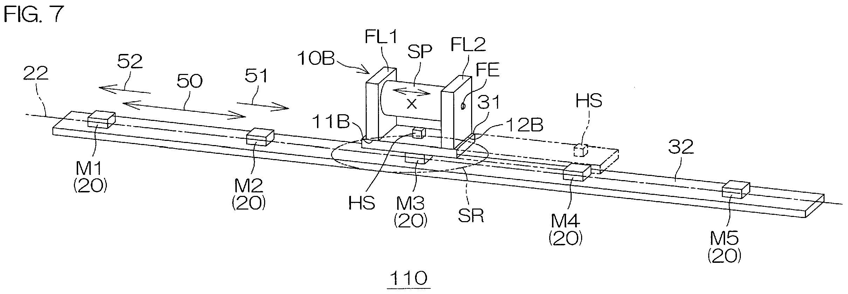

FIG. 7 is a perspective view that describes an exemplary configuration of a position detection device according to another example embodiment of the present invention, showing an exemplary configuration of a linear position detection device 110. The position detection device 110 detects the position of a second support 32 which is linearly moved along a predetermined movement direction axis 50 with respect to a first support 31. The position detection device 110 includes the power generation sensor 10B which has the structure including the I-shaped magnetic flux conducting pieces FL1, FL2 (see FIG. 5A). The power generation sensor 10B is disposed with the axis direction x of its magnetic wire FE coinciding with the movement direction axis 50.

The first support 31 is, for example, a printed wiring board. The magnetic flux conducting ends 11B, 12B (detection region opposition surfaces) of the first magnetic flux conducting piece FL1 and the second magnetic flux conducting piece FL2 are joined with one of the major surfaces of the first support 31, whereby the power generation sensor 10B is supported by the first support 31.

A sensor element HS of a magnetic sensor is mounted on the major surface of the first support 31 mounted with the power generation sensor 10B. The sensor element HS is disposed between the first magnetic flux conducting piece FL1 and the second magnetic flux conducting piece FL2, more specifically, at an intermediate position between the first magnetic flux conducting piece FL1 and the second magnetic flux conducting piece FL2 with respect to the axis direction x. The sensor element HS is disposed in a space in which the magnetic flux conducting pieces FL1, FL2 are opposed to each other, and is accommodated within the widths of the magnetic flux conducting pieces FL1, FL2. Thus, a detection portion including the power generation sensor 10B and the sensor element HS is entirely accommodated within the width of the power generation sensor 10B.

In the illustrated example, the second support 32 is an elongated plate, which is disposed with its longitudinal axis coinciding with the movement direction axis 50. A plurality of magnets M1 to M5 are arranged equidistantly along the movement direction axis 50 (i.e., along the length of the second support 32) on the major surface of the second support 32 opposed to the power generation sensor 10B. A distance between each adjacent two of the magnets M1 to M5 arranged along the movement direction axis 50 is preferably greater than the length of the magnetic wire FE, preferably 1.5 or greater times the length of the magnetic wire FE. The magnets M1 to M5 are fixed to the second support 32 such that magnetic poles thereof having the same polarity (magnetic poles thereof having one of an N-polarity and an S-polarity, e.g., N-poles) are opposed to the power generation sensor 10B. The magnetization directions of the magnets M1 to M5 are parallel to the longitudinal axes of the I-shaped magnetic flux conducting pieces FL1, FL2. In other words, the magnetization directions of the magnets M1 to M5 are parallel to a direction extending from the magnetic wire FE to the detection region SR orthogonally to the axis direction x of the magnetic wire FE.

When the second support 32 is linearly moved in a first direction 51 along the movement direction axis 50, the magnets M1 to M5 are moved along a linear track 22 extending parallel to the movement direction axis 50 through the detection region SR. Thus, the magnets M1 to M5 are each brought into opposed relation to the magnetic flux conducting end 11B of the first magnetic flux conducting piece FL1 and then to the magnetic flux conducting end 12B of the second magnetic flux conducting piece FL2. At this time, the coil SP of the power generation sensor 10B sequentially generates one positive pulse and one negative pulse according to the operation principle described with reference to FIGS. 1A to 1E. When the second support 32 is linearly moved in a second direction 52 along the movement direction axis 50, on the other hand, the magnets M1 to M5 are each brought into opposed relation to the magnetic flux conducting end 12B of the second magnetic flux conducting piece FL2 and then to the magnetic flux conducting end 11B of the first magnetic flux conducting piece FL1. At this time, the coil SP of the power generation sensor 10B sequentially generates one negative pulse and one positive pulse. Therefore, two voltage pulses are generated by the passage of each of the magnets M1 to M5 through the detection region SR of the power generation sensor 10B.

When any one of the magnets M1 to M5 is opposed to the power generation sensor 10B on the linear track 22 between the first magnetic flux conducting piece FL1 and the second magnetic flux conducting piece FL2, the sensor element HS of the magnetic sensor generates an identification signal. Therefore, the sensor element HS functions in substantially the same manner as described with reference to FIGS. 2A to 2D.

The power generation sensor 10C including the L-shaped magnetic flux conducting pieces FL1, FL2 as shown in FIG. 6A may be employed instead of the power generation sensor 10B. In this case, the sensor element HS of the magnetic sensor is disposed between the adjacent ends 42a of the axis-parallel portions 42 of the magnetic flux conducting pieces FL1, FL2 provided in pair.

In FIG. 7, the sensor element HS is mounted on the major surface of the first support 31 adjacent to the power generation sensor 10B by way of example, but the sensor element HS may be mounted on a major surface of the first support 31 opposite from the power generation sensor 10B.

The sensor element HS of the magnetic sensor is not necessarily required to be disposed between the first magnetic flux conducting piece FL1 and the second magnetic flux conducting piece FL2 with respect to the movement direction axis 50, but may be disposed as shown by a two-dot-and-dash line in FIG. 7 by way of example. That is, the sensor element HS of the magnetic sensor may be disposed at a position such that, when any one of the magnets (the magnet M3 in FIG. 7) is located between the first magnetic flux conducting piece FL1 and the second magnetic flux conducting piece FL2 on the linear track 22, another one of the magnets M (the magnet M4 in FIG. 7) is opposed to the sensor element HS. In this case, the sensor element HS of the magnetic sensor may be supported by the first support 31 or may be supported by a third support disposed such that the relative position thereof with respect to the first support 31 is not changed.

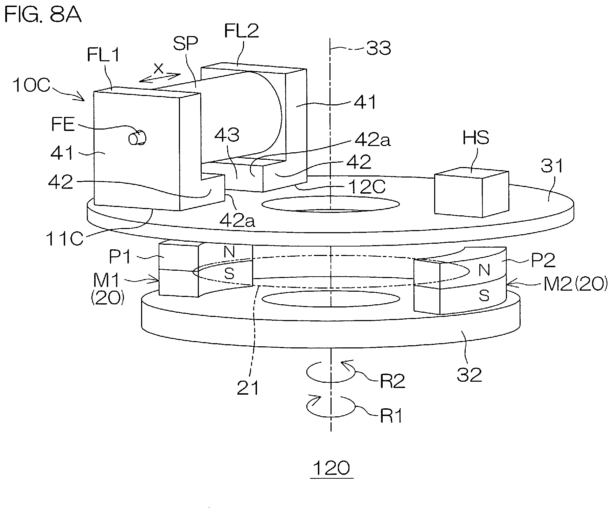

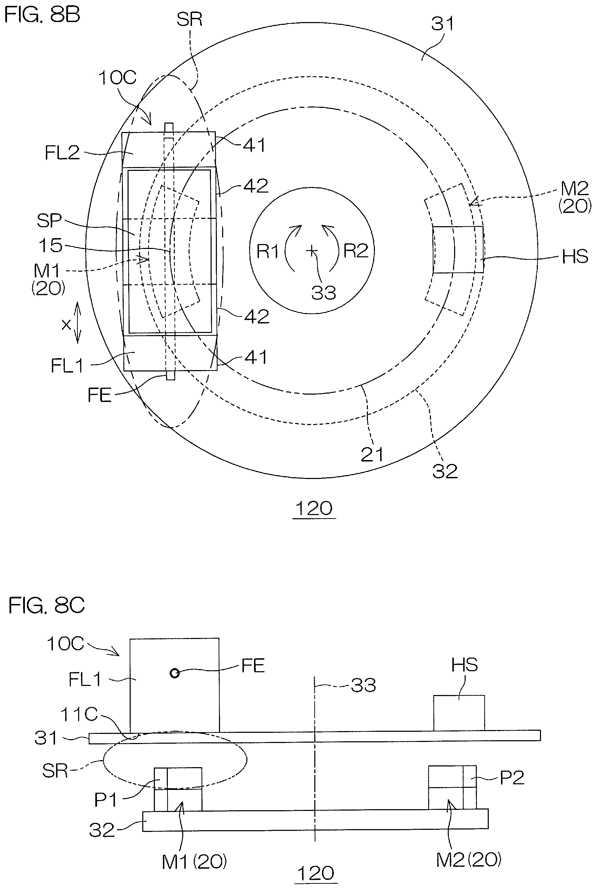

FIGS. 8A to 8C are diagrams that describe an exemplary configuration of a position detection device according to further another example embodiment of the present invention, showing a position detection device 120 employing the power generation sensor 10C (see FIG. 6A) including the L-shaped magnetic flux conducting pieces. The position detection device 120 is a device that detects a rotational position about a rotation axis 33. FIG. 8A is a perspective view of the position detection device 120. FIG. 8B is a plan view as seen along the rotation axis 33. FIG. 8C is a side view as seen in a rotation radius direction parallel to the axis direction x of the magnetic wire FE.

The position detection device 120 includes the power generation sensor 10C, and a magnetic field generation source 20. The power generation sensor 10C is disposed on a first support 31, and supported by the first support 31. The magnetic field generation source 20 is fixed to a second support 32. In this example, the second support 32 is rotated relative to the first support 31 about the rotation axis 33. Specifically, the first support 31 is a printed wiring board, and is disposed in a plane orthogonal to the rotation axis 33.

The power generation sensor 10C is mounted on one of opposite major surfaces of the first support 31 (printed wiring board). More specifically, the axis-parallel portions 42 of the first magnetic flux conducting piece FL1 and the second magnetic flux conducting piece FL2 of the power generation sensor 10C are joined with a wiring pattern (not shown) formed on the one major surface of the first support 31 (printed wiring board), whereby the power generation sensor 10C is surface-mounted on the first support 31 (printed wiring board). The power generation sensor 10C is disposed such that the axis direction x of the magnetic wire FE extends along a tangential line of a circle defined about the rotation axis 33 through a point (point of tangency) present on the circle and the axially middle point 15 of the magnetic wire FE coincides with the point of tangency.

The detection region SR of the power generation sensor 10C is located on a side of the axis-parallel portions 42 opposite from the magnetic wire FE. In this example, the detection region SR of the power generation sensor 10C is a region adjacent to the other major surface of the first support 31 (printed wiring board). The magnetic field generation source 20 includes a plurality of magnets (two magnets M1, M2 in this example) that sequentially pass through the detection region SR as the second support 32 is rotated. The magnets M1, M2 are disposed such that the magnetic poles P1, P2 thereof having the same polarity (N-poles in the illustrated example) are opposed to the first support 31 (printed wiring board). In this example, the second support 32 is configured in a ring shape surrounding the rotation axis 33. More specifically, the second support 32 is composed of a ring-shaped plate, and is disposed in a plane orthogonal to the rotation axis 33 and parallel to the first support 31 (printed wiring board). The magnets M1, M2 are fixed to a surface of the second support 32 opposed to the other major surface of the first support 31 (printed wiring board). The magnets M1, M2 are arranged circumferentially equidistantly about the rotation axis 33. In the illustrated specific example, the two magnets M1, M2 are arranged at an angular interval of 180 degrees about the rotation axis 33. The magnetization directions of the magnets M1, M2 are parallel to the rotation axis 33. Further, the magnets M1, M2 are fixed to the second support 32 such that the magnetic poles P1, P2 thereof having the same polarity (the N-poles in the illustrated example) are opposed to the first support 31 (printed wiring board). In this example embodiment, the magnets M1, M2 each have an arcuate shape extending along a circle defined about the rotation axis 33 as seen in plan along the rotation axis 33. Distances from the rotation axis 33 to the magnets M1, M2 (more specifically, to the centers of the magnetic poles P1, P2 opposed to the first support 31) are each equal to a distance from the rotation axis 33 to the axially middle point 15 of the magnetic wire FE. That is, the magnetic wire FE and the magnets M1, M2 are respectively located on circles having the same radius about the rotation axis 33 as seen in plan along the rotation axis 33. Thereby, the magnetic wire FE and the magnets M1, M2 are arranged in a positional relationship such that the magnets M1, M2 can be opposed to the magnetic wire FE in a direction parallel to the rotation axis 33. The second support 32 is preferably a yoke composed of a magnetically soft component.

By the rotation of the second support 32 about the rotation axis 33, the magnetic poles P1, P2 are moved on a circular track 21 extending about the rotation axis 33 through the detection region SR. The axis direction x of the magnetic wire FE is parallel to a tangential line of the circular track 21 extending through a certain point (point of tangency) present on the circular track 21, and the axially middle point 15 of the magnetic wire FE is present on a perpendicular line extending through the point of tangency perpendicularly to the tangential line (in this example, a perpendicular line parallel to the rotation axis 33). In other words, the axially middle point 15 of the magnetic wire FE is located on a certain point (point of tangency) present on a circle defined about the rotation axis 33 and having the same radius as the circular track 21, and the magnetic wire FE extends along a tangential line of the circle extending through the point of tangency.

A distance between the first support 31 and the second support 32 as measured along the rotation axis 33 is set to a suitable value that permits the magnets M1, M2 to enter the detection region SR of the power generation sensor 10C by the rotation of the second support 32.

A sensor element HS of a magnetic sensor is further mounted on the major surface of the first support 31 (printed wiring board) mounted with the power generation sensor 10C. In this example, the sensor element HS is located symmetrically with the axially middle point of the magnetic wire FE about the rotation axis 33. That is, the sensor element HS and the axially middle point 15 of the magnetic wire FE are opposed to each other with the rotation axis 33 interposed therebetween. Thus, when either one of the magnetic poles P1, P2 is opposed to the power generation sensor 10C between the first magnetic flux conducting piece FL1 and the second magnetic flux conducting piece FL2 on the circular track 21, the sensor element HS detects a magnetic field from the other of the magnetic poles P1, P2, and outputs an identification signal.

In comparison with the configuration shown in FIGS. 1A to 1E described above, the magnetic poles P1, P2 are each opposed to the magnetic flux conducting ends 11, 12 in the rotation radius direction as shown in FIGS. 1A to 1E. In this example embodiment, in contrast, the magnetic poles P1, P2 are each opposed to the magnetic flux conducting ends 11C, 12C in a direction parallel to the rotation axis 33. Even with this arrangement, every time the magnetic pole P1, P2 of either one of the magnets M1, M2 passes through the detection region SR along the circular track 21 by rotation in a forward rotation direction R1 about the rotation axis 33, one positive pulse and one negative pulse are sequentially generated according to the same operation principle as in FIGS. 1A to 1E. Further, every time the magnetic pole P1, P2 of the either one of the magnets M1, M2 passes through the detection region SR along the circular track 21 by rotation in a reverse rotation direction R2 about the rotation axis 33, one negative pulse and one positive pulse are sequentially generated. The rotation direction can be identified by the sensor element HS that outputs the identification signal when the one magnet M1, M2 is present between the first magnetic flux conducting piece FL1 and the second magnetic flux conducting piece FL2 on the circular track 21.

The power generation sensor 10C supported by the first support 31 is disposed with the detection region SR thereof facing toward the second support 32. Therefore, the position detection device 120 thus provided has a smaller size as measured radially about the rotation axis 33.

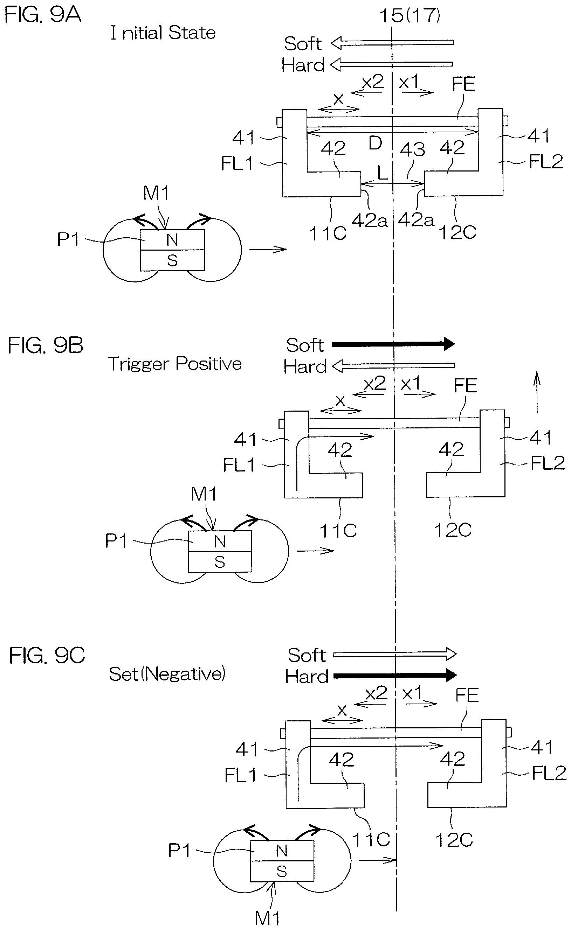

FIGS. 9A to 9E are diagrams that describe the operation of the power generation sensor 10C including the L-shaped magnetic flux conducting pieces FL1, FL2 in detail. FIG. 9A (Initial State) shows a first set state which is a preparatory state for the outputting of a positive voltage pulse. That is, the magnetization directions of the soft layer and the hard layer of the magnetic wire FE are consistent to both extend in the second axial direction x2. When the magnetic pole P1 (the N-pole in the illustrated example) of the magnet M1 is moved closer to the magnetic flux conducting end 11C (the detection region opposition surface of the axis-parallel portion 42) of the first magnetic flux conducting piece FL1 in the first set state, as shown in FIG. 9B (Trigger Positive), a first state is achieved in which the magnetic flux from the magnetic pole P1 is conducted through the first magnetic flux conducting piece FL1, whereby the operational magnetic field is applied to the magnetic wire FE in the first axial direction x1. Thus, the large Barkhausen effect is exhibited to reverse the magnetization direction of the soft layer into the first axial direction x1. Accordingly, the coil SP generates a positive voltage pulse.

When the magnetic pole P1 is further moved closer to the magnetic flux conducting end 11C of the first magnetic flux conducting piece FL1 from the first state, as shown in FIG. 9C (Set (Negative)), the magnetic flux applied to the magnetic wire FE in the first axial direction x1 is strengthened to apply the stabilization magnetic field, whereby the magnetization direction of the hard layer is also reversed into the first axial direction x1. Thus, a second set state is achieved, in which the magnetization directions of the soft layer and the hard layer are consistent to both extend in the first axial direction x1. The second set state is a preparatory state for the generation of a negative voltage pulse.

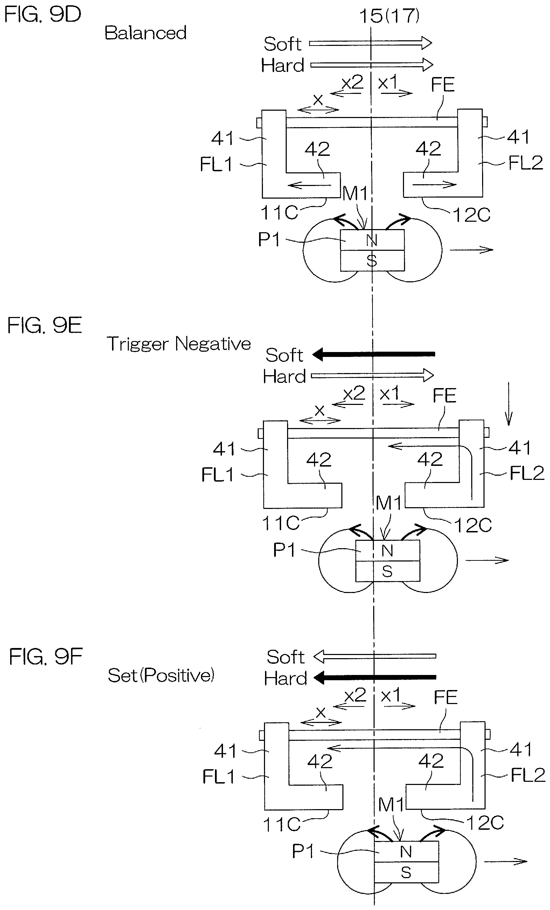

When the magnet M1 is further moved from the second set state to move the magnetic pole P1 closer to the magnetic flux conducting end 12C (the detection region opposition surface of the axis-parallel portion 42) of the second magnetic flux conducting piece FL2, as shown in FIG. 9E (Trigger Negative), a second state is achieved, in which the magnetic flux from the magnetic pole P1 is conducted through the second magnetic flux conducting piece FL2, whereby the operational magnetic field is applied to the magnetic wire FE in the second axial direction x2. Thus, the large Barkhausen effect is exhibited to reverse the magnetization direction of the soft layer into the second axial direction x2. Accordingly, the coil SP generates a negative voltage pulse.

When the magnet M1 is further moved from the second state to move the magnetic pole P1 still closer to the magnetic flux conducting end 12C of the second magnetic flux conducting piece FL2, as shown in FIG. 9F (Set (Positive)), the magnetic flux applied to the magnetic wire FE in the second axial direction x2 is strengthened to apply the stabilization magnetic field, whereby the magnetization direction of the hard layer is also reversed into the second axial direction x2. Thus, the first set state is achieved again, in which the magnetization directions of the soft layer and the hard layer are consistent to both extend in the second axial direction x2.

When the magnetic pole P1 is moved through the vicinity of the power generation sensor 10C, the axis-parallel portions 42 of the magnetic flux conducting pieces FL1, FL2 are located between the magnetic wire FE and the magnetic pole P1. Thus, the axis-parallel portions 42 magnetically shield the magnetic wire FE. Therefore, the magnetic flux from the magnetic pole P1 is attracted to the magnetic flux conducting ends 11C, 12C (the detection region opposition surfaces of the axis-parallel portions 42) through which the magnetic flux enters the magnetic flux conducting pieces FL1, FL2 to be guided to the ends of the magnetic wire FE. This makes it possible to apply a magnetic field in the axis direction x to the magnetic wire FE over substantially the entire axial length range of the magnetic wire FE. That is, the magnetic flux conducting pieces FL1, FL2 are configured so as to have a magnetic field correcting function such that magnetic fields generated around the magnetic flux conducting ends 11C, 12C by the magnetic pole P1 are corrected into magnetic fields extending in the axis direction x and the corrected magnetic fields are applied to the magnetic wire FE.

Even when the magnetic pole P1 is located at an intermediate position between the paired magnetic flux conducting pieces FL1, FL2, as shown in FIG. 9D (Balanced), almost no magnetic flux is guided from the magnetic pole P1 directly to the axially middle portion of the magnetic wire FE because of the magnetic field correcting function. At this time, magnetic fluxes respectively conducted through the magnetic flux conducting pieces FL1, FL2 and applied from the opposite end portions of the magnetic wire FE are balanced. Therefore, no magnetic field is applied to the magnetic wire FE and, hence, the magnetization direction of the magnetic wire FE is not changed. Then, a state shown in FIG. 9E is achieved, in which the soft layer is reversed at once to generate a voltage pulse.

Without the magnetic field correcting function described above, there is a possibility that, as the magnetic pole P1 is moved between the magnetic flux conducting end of the first magnetic flux conducting piece FL1 and the magnetic flux conducting end of the second magnetic flux conducting piece FL2, the magnetization reversal of the magnetic wire FE gradually occurs from one end to the other end of the magnetic wire FE. That is, the partial magnetization reversal of the magnetic wire FE is liable to occur. If the partial magnetization reversal occurs, a large Barkhausen effect sufficient to provide an effective output cannot be expected.

In this example embodiment, as shown in FIG. 9A, the distance L of the gap 43 between the adjacent ends 42a of the paired axis-parallel portions 42 as measured in the axis direction x is 5% to 50% (preferably 20% to 40%) of a distance D between the magnetic wire connection positions of the paired axis-orthogonal portions 41 as measured in the axis direction x. If this percentage is 5% or lower, the large Barkhausen effect is liable to be weakened due to the influence of a magnetic path formed through the smaller gap 43. If the percentage is 50% or higher, the areas of the magnetic flux conducting ends 11C, 12C (detection region opposition surfaces) are liable to be reduced to thereby weaken the large Barkhausen effect. Where the percentage is in a range of 5% to 50%, it is possible to exhibit the large Barkhausen effect to an extent of 90% or higher of that expected from the intrinsic property of the magnetic wire FE. Where the percentage is in a range of 20% to 40%, it is possible to exhibit the large Barkhausen effect to an extent of almost 100% of that expected from the intrinsic property of the magnetic wire FE.

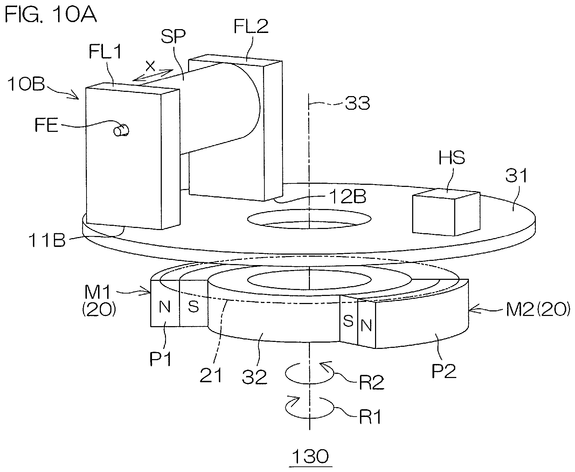

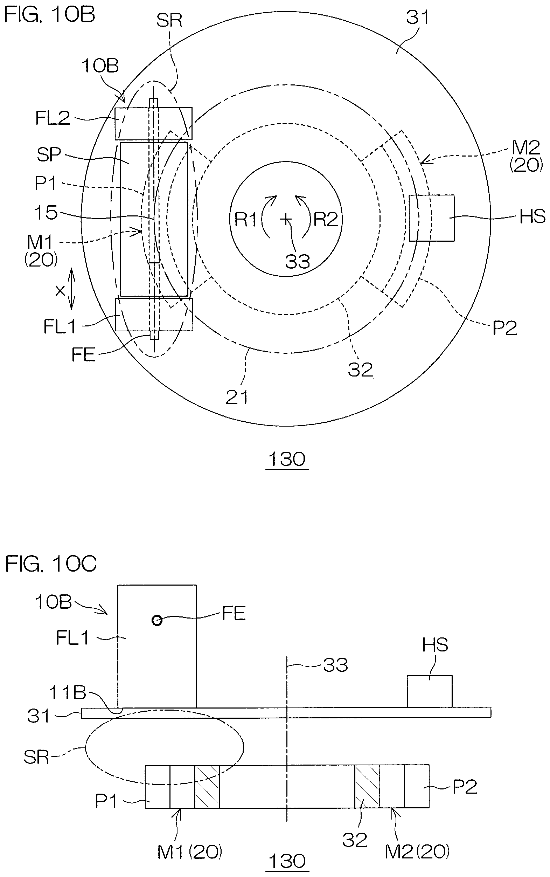

FIGS. 10A to 10C are diagrams that describe an exemplary configuration of a position detection device according to still another example embodiment of the present invention, showing a position detection device 130 employing the power generation sensor 10B (see FIG. 5A) having the I-shaped magnetic flux conducting pieces. The position detection device 130 is a device that detects a rotational position about a rotation axis 33. FIG. 10A is a perspective view of the position detection device 130. FIG. 10B is a plan view as seen along the rotation axis 33. FIG. 10C is a side view as seen in a rotation radius direction parallel to the axis direction x of the magnetic wire FE. In FIGS. 10A to 10C, components corresponding to those shown in FIGS. 8A to 8C will be denoted by the same reference characters as in FIGS. 8A to 8C.

In this example embodiment, the power generation sensor 10B having the I-shaped magnetic flux conducting pieces FL1, FL2 is used, and the magnetization directions of magnets M1, M2 and the shape of a second support 32 are different from those in the example embodiment shown in FIGS. 8A to 8C.

In this example embodiment, the magnetization directions of the magnets M1, M2 each extend in the rotation radius direction about the rotation axis 33 (in a direction orthogonal to the rotation axis 33). Further, the magnetic poles P1, P2 of the magnets M1, M2 having the same polarity (N-poles in the illustrated example) are each disposed outward in the rotation radius direction. The magnets M1, M2 are each configured in an arcuate shape extending along a circle defined about the rotation axis 33 with their N-poles located outward and with their S-poles located inward. The second support 32 is a ring-shaped magnetically-soft yoke. The S-poles of the magnets M1, M2 are connected to the outer circumferential surface of the second support 32.

The power generation sensor 10B is disposed such that the magnetic wire FE thereof extends along a tangential line of a circle defined about the rotation axis 33 through a point (point of tangency) present on the circle. The axially middle point 15 of the magnetic wire FE coincides with the point of tangency. As seen in plan along the rotation axis 33, the axially middle point 15 of the magnetic wire FE is located at a position at which the center of one of the outward magnetic pole and the inward magnetic pole (the outward magnetic pole in the illustrated example) of each of the magnets M1, M2 can be brought into opposed relation thereto as the second support 32 is rotated. The power generation sensor 10B responds to a magnetic field from each of the magnetic poles P1, P2 that can be opposed thereto.

As the second support 32 is rotated about the rotation axis 33, the magnetic poles P1, P2 are moved along a circular track 21 extending about the rotation axis 33 through the detection region SR. The axis direction x of the magnetic wire FE is parallel to a tangential line of the circular track 21 extending through a certain point (point of tangency) present on the circular track 21, and the axially middle point 15 is present on a perpendicular line extending through the point of tangency perpendicularly to the tangential line (a perpendicular line parallel to the rotation axis 33 in this example). In other words, the axially middle point 15 of the magnetic wire FE is located at a certain point (point of tangency) present on a circle defined about the rotation axis 33 and having the same radius as the circular track 21, and the magnetic wire FE extends along a tangential line of the circle extending through the point of tangency.

This arrangement also makes it possible to detect the rotational position in the same manner as the position detection device 120 shown in FIGS. 8A to 8C.

As shown in FIG. 5A, the I-shaped magnetically-soft components of the magnetic flux conducting pieces FL1, FL2 are each configured such that the length H of a part thereof from the magnetic wire FE to the magnetic flux conducting end 11B, 12B is greater than the length h of a part thereof from the magnetic wire FE to an end thereof opposite from the magnetic flux conducting end 11B, 12B. That is, the I-shaped magnetically-soft components are each magnetically coupled to the magnetic wire FE at a position offset from the longitudinally middle point thereof in one direction. This makes it possible to increase the distances from the magnetic wire FE to the magnetic flux conducting ends 11B, 12B while reducing the sizes of the I-shaped magnetically-soft components.

The length H of the part of the I-shaped magnetically-soft component from the magnetic wire FE to the magnetic flux conducting end 11B, 12B is preferably not less than 50% of a distance D between the magnetic wire connection positions of the first magnetic flux conducting piece FL1 and the second magnetic flux conducting piece FL2. Thus, a magnetic flux from the magnetic pole P1, P2 can be mostly guided to the magnetic flux conducting piece FL1, FL2, and conducted through the magnetic flux conducting piece FL1, FL2 to the magnetic wire FE.

This arrangement enhances the magnetic field correcting function of the magnetic flux conducting pieces FL1, FL2 such that magnetic fields generated around the magnetic flux conducting ends 11B, 12B by the magnetic pole P1 are corrected into magnetic fields extending in the axis direction x and the corrected magnetic fields are applied to the magnetic wire FE. This reduces the size of the power generation sensor 10B (and hence reduces the size of the position detection device), and yet substantially prevents the magnetic fluxes applied from the magnetic poles P1, P2 from directly entering the axially middle portion of the magnetic wire FE. Thus, voltage pulses of a greater amplitude can be provided due to the large Barkhausen effect. The position detection device 130 thus provided includes the power generation sensor 10B having a smaller size and a higher output capacity, and has a higher resolution.

In the arrangement shown in FIGS. 10A to 10C, the power generation sensor 10C (see FIG. 6A) having the L-shaped magnetic flux conducting pieces FL1, FL2 may be employed.

In the position detection devices 120, 130 shown in FIGS. 8A to 8C and FIGS. 10A to 10C, respectively, the second support 32 is the magnetically soft yoke, but the second support 32 is not necessarily required to be the magnetically soft yoke.

While the example embodiments of the present invention have thus been described, the present invention may be embodied in some other ways as will be described by way of example.

In the example embodiments described above, the magnetic field generation source includes the plurality of magnets by way of example. Alternatively, for example, a plate yoke may be provided in contact with one of opposite magnetic pole surfaces of a single magnet, and a plurality of projections are provided in spaced relation on a surface of the yoke opposite from the magnet. Thus, these projections can be used as the plurality of magnetic poles. That is, the number of magnetic poles can be made greater than the number of magnets.

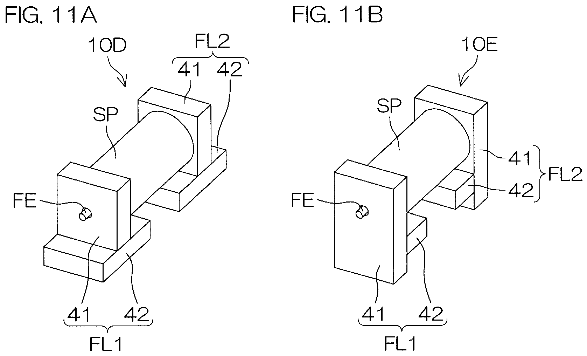

In the L-shaped magnetically-soft components (the L-shaped magnetic flux conducting pieces FL1, FL2) shown in FIGS. 6A, 8A to 8C and the like, the axis-orthogonal portion 41 and the axis-parallel portion 42 may be configured as separate members. In this case, the magnetically-soft components may be each configured in a T-shape instead of the L-shape by combining the axis-orthogonal portion 41 and the axis-parallel portion 42 in abutment with each other. In FIGS. 11A and 11B, power generation sensors 10D, 10E are shown, which include inverted-T-shaped magnetically-soft components (FIG. 11A) and lying-T-shaped magnetically-soft components (FIG. 11B), respectively, as examples of the T-shaped magnetically-soft components of the magnetic flux conducting pieces FL1, FL2. Further, the magnetically soft components may each unitarily include an axis-orthogonal portion 41 and an axis-parallel portion 42 configured in a T-shape.

In the position detection device 110 shown in FIG. 7, the magnetic field generation source 20 includes the five magnets M1 to M5, and the five poles having the same polarity can be brought into opposed relation to the power generation sensor 10B by way of example. However, the number of the poles is not limited to five. In the position detection device 120 shown in FIGS. 8A to 8C and the position detection device 130 shown in FIGS. 10A to 10C, the two magnetic poles P1, P2 of the magnetic field generation source 20 can be brought into opposed relation to the power generation sensor 10C, 10B by way of example. However, three or more magnetic poles having the same polarity may be arranged circumferentially equidistantly about the rotation axis 33. In this case, the layout of the sensor element HS (magnetic sensor) may be designed such that, when one of the magnetic poles is opposed to the power generation sensor 10C, 10B between the paired magnetic flux conducting pieces FL1, FL2 on the track, a magnetic field from another of the magnetic poles can be detected by the sensor element HS. The interval of the magnetic poles on the track is preferably longer than the axial length of the magnetic wire FE, preferably not less than 1.5 times the axial length of the magnetic wire FE.

In the example embodiments described above, the position detection devices each including a single power generation sensor 10 (10A, 10B, 10C) are shown, but may each include two or more power generation sensors. However, the provision of the single power generation sensor 10 is preferred because the size and the costs of the position detection device can be reduced. That is, the position detection device including the single power generation sensor typically has the least size and a higher resolution.

In the example embodiments described above, the position detection devices each including the single sensor element HS are shown by way of example, but may each include two or more sensor elements. However, the provision of the single sensor element HS is preferred because the size and the costs of the position detection device can be reduced.

While the present invention has been described in detail by way of the example embodiments thereof, it should be understood that these example embodiments are merely illustrative of the technical principles of the present invention but not limitative of the invention. The scope of the present invention is to be limited only by the appended claims.

### DESCRIPTION OF REFERENCE CHARACTERS

10, 10A, 10B, 10C, 10D, 10E: Power generation sensor
11, 11B, 11C: Magnetic flux conducting end
12, 12B, 12C: Magnetic flux conducting end
13A: Through-hole
13B, 13C: Wire placement portion
15: Axially middle point
20: Magnetic field generation source
21: Circular track
22: Linear track
31: First support
32: Second support
33: Rotation axis
41: Axis-orthogonal portion
42: Axis-parallel portion
42a: Adjacent end
50: Movement direction axis
51: First direction
52: Second direction
100, 110, 120, 130: Position detection device
FE: Magnetic wire
SP: Coil
SR: Detection region
FL1: First magnetic flux conducting piece (magnetically soft component)
FL2: Second magnetic flux conducting piece (magnetically soft component)
x: Axis direction
x1: First axial direction
x2: Second axial direction
HS: Sensor element
D: Distance
L: Distance
M, M1 to M5: Magnet
P1, P2: Magnetic pole
R1: Forward rotation direction
R2: Reverse rotation direction

## Claims

1. A position detection device comprising:
a first support;
a second support that is movable relative to the first support;
a power generation sensor disposed on the first support; and
a magnetic field generation source fixed to the second support such that the relative movement of the second support causes a plurality of magnetic poles having the same polarity to sequentially enter a detection region of the power generation sensor along a track extending through the detection region;
wherein the power generation sensor includes a magnetic wire configured to exhibit a large Barkhausen effect, a coil wound around the magnetic wire, and a first magnetic flux conducting piece and a second magnetic flux conducting piece respectively magnetically coupled to opposite end portions of the magnetic wire and each having a magnetic flux conducting end that is opposed to the detection region;
wherein the coil of the power generation sensor is configured to generate a positive voltage pulse in a first state in which a magnetic flux from any one of the magnetic poles of the magnetic field generation source is conducted through the first magnetic flux conducting piece, and to generate a negative voltage pulse in a second state in which the magnetic flux from the any one of the magnetic poles of the magnetic field generation source is conducted through the second magnetic flux conducting piece.

2. The position detection device according to claim 1, further comprising a sensor element that outputs an identification signal indicating whether or not the any one of the magnetic poles of the magnetic field generation source is located between the magnetic flux conducting end of the first magnetic flux conducting piece and the magnetic flux conducting end of the second magnetic flux conducting piece.

3. The position detection device according to claim 1 or 2,
wherein the magnetic wire has a core portion and a shell portion provided around the core portion, and one of the core portion and the shell portion is a soft layer and the other of the core portion and the shell portion is a hard layer,
wherein the any one of the magnetic poles is moved closer to the magnetic flux conducting end of the first magnetic flux conducting piece along the track in a first set state in which magnetization directions of the soft layer and the hard layer are consistent to both extend in a first axial direction which is one of opposite axial directions of the magnetic wire, whereby the magnetization direction of the soft layer is reversed into a second axial direction which is the other axial direction of the magnetic wire and the first state is achieved in which the positive voltage pulse is generated from the coil,
wherein the any one of the magnetic poles is moved still closer to the first magnetic flux conducting piece along the track from the first state, whereby the magnetization direction of the hard layer is reversed into the second axial direction and a second set state is achieved in which the magnetization directions of the soft layer and the hard layer are consistent to both extend in the second axial direction,
wherein the any one of the magnetic poles is moved closer to the magnetic flux conducting end of the second magnetic flux conducting piece along the track in the second set state, whereby the magnetization direction of the soft layer is reversed into the first axial direction and the second state is achieved in which the negative voltage pulse is generated from the coil,
wherein the any one of the magnetic poles is moved still closer to the magnetic flux conducting end of the second magnetic flux conducting piece along the track from the second state, whereby the magnetization direction of the hard layer is reversed into the first axial direction and the first set state is achieved in which the magnetization directions of the soft layer and the hard layer are consistent to both extend in the first axial direction.

4. The position detection device according to any one of claims 1 to 3,
wherein the first magnetic flux conducting piece and the second magnetic flux conducting piece respectively include magnetically soft components having substantially the same shape,
wherein the magnetically soft components respectively include wire placement portions through which the opposite end portions of the magnetic wire extend, and are each configured in an I-shape as extending from the wire placement portion to the magnetic flux conducting end in a predetermined direction orthogonal to an axis direction of the magnetic wire.

5. The position detection device according to claim 4, wherein the magnetically soft components each have a greater partial length as measured from the magnetic wire to the magnetic flux conducting end thereof than as measured from the magnetic wire to an end thereof opposite from the magnetic flux conducting end, and the partial length measured from the magnetic wire to the magnetic flux conducting end is not smaller than 50% of a distance between magnetic wire connection positions of the first magnetic flux conducting piece and the second magnetic flux conducting piece.

6. The position detection device according to any one of claims 1 to 3,
wherein the first magnetic flux conducting piece and the second magnetic flux conducting piece respectively include magnetically soft components having substantially the same shape,
wherein the magnetically soft components of the first magnetic flux conducting piece and the second magnetic flux conducting piece respectively include axis-orthogonal portions provided in pair as extending parallel to each other from the opposite end portions of the magnetic wire orthogonally to an axis direction of the magnetic wire and respectively connected to the opposite end portions of the magnetic wire, and axis-parallel portions provided in pair as extending toward each other from distal end portions of the axis-orthogonal portions in the axis direction and respectively having adjacent ends opposed to each other and spaced a gap from each other in the axis direction, and are each configured in an L-shape or a T-shape,
wherein the magnetic flux conducting ends opposed to the detection region are respectively provided on the axis-parallel portions.

7. The position detection device according to claim 6, wherein the gap has a distance that is 5% to 50% of a distance between magnetic wire connection positions of the axis-orthogonal portions provided in pair as measured in the axis direction.

8. The position detection device according to any one of claims 1 to 7, wherein the first magnetic flux conducting piece and the second magnetic flux conducting piece are configured such that magnetic fields generated around the magnetic flux conducting ends of the first magnetic flux conducting piece and the second magnetic flux conducting piece by the any one of the magnetic poles present in the detection region are corrected into magnetic fields extending in the axis direction of the magnetic wire and the corrected magnetic fields are applied to the magnetic wire.

9. The position detection device according to any one of claims 1 to 8,
wherein the magnetic poles of the magnetic field generation source enter the detection region of the power generation sensor along the track, as the second support is moved relative to the first support,
wherein the axis direction of the magnetic wire of the power generation sensor is parallel to a tangential line of the track extending through a certain point of tangency present on the track, and an axially middle point of the magnetic wire is present on a perpendicular line extending through the point of tangency perpendicularly to the tangential line.

10. The position detection device according to any one of claims 1 to 9,
wherein the second support is rotated relative to the first support about a predetermined rotation axis,
wherein the first support and the second support are opposed to each other and spaced from each other in a direction parallel to the rotation axis,
wherein the plurality of magnetic poles of the magnetic field generation source are arranged equidistantly on a circular track defined about the rotation axis, and magnetization directions of the respective magnetic poles are parallel to the rotation axis or are parallel to a radius of the circular track,
wherein the power generation sensor is supported by the first support such that the middle point of the magnetic wire is located at a certain point of tangency present on a circle having the same radius as the circular track about the rotation axis and the detection region faces toward the second support with the magnetic wire extending along a tangential line of the circle extending through the point of tangency.
